# EUROPÄISCHE PATENTSCHRIFT

(11) **EP 4 323 673 B1**
(45) Veröffentlichungstag und Bekanntmachung des Hinweises auf die Patenterteilung: **21.08.2024**
(21) Anmeldenummer: 23709135.0
(22) Anmeldetag: 28.02.2023
(51) Int. Cl.: F16J 15/34, B33Y 80/00

(54) **HARTDICHTRING MIT GLEITLAUFFLÄCHE, GLEITLAUF-DICHTVORRICHTUNG UND HERSTELLUNGSVERFAHREN**
HARD SEALING RING HAVING AN ANTI-FRICTION SURFACE, ANTI-FRICTION SEALING DEVICE, AND PRODUCTION METHOD
BAGUE D'ÉTANCHÉITÉ DURE À SURFACE DE GLISSEMENT, DISPOSITIF D'ÉTANCHÉITÉ À GLISSEMENT ET PROCÉDÉ DE FABRICATION

(30) Priorität: 04.03.2022 DE 202022101203 U
(43) Veröffentlichungstag der Anmeldung: 21.02.2024
(62) Teilanmeldung aus: 23211074.2
(73) Patentinhaber: procudi GmbH, 86438 Kissing (DE)
(72) Erfinder: MATZ, Marc-Manuel, 86438 Kissing (DE); LEE HAMILTON, Jeffrey, Swisher, Iowa 52338 (US)
(74) Vertreter: ERNICKE Patent- und Rechtsanwälte PartmbB
(86) Internationale Anmeldenummer: PCT/EP2023/055002
(87) Internationale Veröffentlichungsnummer: WO 2023/165984

(56) Entgegenhaltungen:
- EP-A2- 1 437 537
- US-A- 4 824 123
- US-A1- 2011 121 518
- US-A1- 2016 369 896
- US-A1- 2017 335 969
- US-B2- 10 746 301
- US-B2- 9 714 713

## Beschreibung

Die vorliegende Offenbarung betrifft einen Hartdichtring, eine Gleitlauf-Dichtvorrichtung mit mind. zwei Hartdichtringen sowie eine zugehörige Herstellungstechnik.

Die bisher bekannten Dichtungskonzepte auf Basis von Hartdichtringen mit einer Gleitlauffläche sind nicht optimal ausgebildet und weisen Nachteile in der Herstellung auf. Sie sind insbesondere nur schwer an neue Einsatzbedingungen anpassbar und erfordern hohe Investitionen in Werkzeugkosten, um neue Ausführungsvarianten an Hartdichtringen bereitzustellen.

In der Regel werden Hartdichtringe mit Gleitlaufflächen heute durch Schleuderguss, Schwerkraftguss oder Feingießen in relativ komplexen mehrteiligen Gussformen hergestellt, sodass für jede angestrebte Form eines Hartdichtrings ein neues Werkzeug bereitgestellt werden muss. Es ist auch eine Herstellung durch Schmieden oder Tiefziehen aus ringförmigen Vorprodukten möglich, was ebenfalls einen hohen Aufwand zur Bereitstellung von Werkzeugen bedeutet. Ferner wird bei den bisherigen Herstellungsverfahren ein hoher Energie- und Materialaufwand erzeugt.

Aus DE 10 2004 042 385 A1 ist ein Verfahren zur Herstellung einer Gleitringdichtung bekannt, bei dem ein Gleitring aus Grauguss hergestellt wird. Anschließend wird auf den Gleitring eine Verschleißschicht durch Sintern aufgebracht.

US 3 086 782 A offenbart die Herstellung eines sog. Face seal durch aus einem Vorprodukt, das einen kreisförmig geschlossenen Umfang hat.

JP H07-103 337 A beschreibt die Herstellung eines Dichtrings durch Tiefziehen aus einem Blechring, der nachfolgend eine Induktionshärtung unterzogen wird.

Aus US 10,746,301 B2 und US 2016/0369896 A1 ist es bekannt, ein sogenanntes face seal durch ein additives Fertigungsverfahren herzustellen. Der ringförmige Körper des face seal umfasst entlang der Umfangsrichtung entweder zwei alternierende Querschnittsformen oder eine Vielzahl von sich im wieder ändernden Querschnittsformen. Das face seal umfasst ein erstes Material, aus dem der Ringkörper gebildet ist, und ein zweites Material, aus dem eine äußere Dichtungslage (outer seal layer) gebildet ist.

US 9,714,713 B2 offenbart ein ringförmiges Dichtungsmittel, das durch Stanzen oder Prägen aus einem Blechring hergestellt ist. Das Dichtungsmittel umfasst eine erste und eine zweite Lagerfläche für einen aufsetzbaren O-Ring, wobei diese Lagerflächen durch mindestens eine Ringkante (raised annular ridge) voneinander getrennt und zueinander beabstandet sind.

Aus US 4,824,123 ist eine Metall-zu-Metall Dichtung für ein spezielles Bohrwerkzeug bekannt, bei dem zwei ringförmige Dichtmittel aus unterschiedlichen Metallen gefertigt sind.

US 2017/0335969 A1 offenbart eine Dichtung, die aus zwei im Wesentlichen gleich geformten ringförmigen Dichtungskörpern besteht, wobei sich die Dichtungskörper im Bereich einer jeweiligen Kontaktfläche berühren. Es wird vorgeschlagen, eine Überzugszusammensetzung (coating composition) auf einer Lagerfläche (loading surface) aufzutragen, wobei die Lagerfläche von der Kontaktfläche abgewandt liegt. An der Lagerfläche kann ein O-förmiger, flexibler Lagerring (load ring) angeordnet sein.

US 2011/0121518 offenbart ein ringförmiges Dichtmittel, das mittels einer zylindrischen Lagerfläche auf einer Welle drehbar und verschieblich gelagert und durch Sintern aus einem Silikonkarbid (SIC) hergestellt ist. Das Dichtmittel weist eine Stirnfläche aus einem anderen Material auf, wobei die Stirnfläche eine geringere Reibung aufweist als die sonstigen Teile des Dichtmittels.

Es ist Aufgabe der vorliegenden Erfindung, einen verbesserten Hartdichtring, eine verbesserte Gleitlauf-Dichtvorrichtung sowie ein verbessertes Herstellungsverfahren aufzuzeigen.

Die vorgenannte Aufgabe wird durch eine Mehrzahl von Aspekten jeweils einzeln oder in Kombination gelöst, wobei diese Aspekte jeweils eigenständige erfinderische Bedeutung haben und sowohl separate als auch synergistische Vorteile mit sich bringen. Diese Aspekte werden nachfolgend jeweils einzeln sowie in bestimmten Kombinationen erläutert. Sie können jedoch in beliebigen anderen Kombinationen zur Anwendung kommen. Insbesondere sind alle Unterkombinationen der separat offenbarten Aspekte vorgesehen, sowohl was die Herstellungsart als auch was die Gestaltung der Hartdichtringe und Gleitlauf-Dichtvorrichtungen anbetrifft.

Der Hartdichtring gemäß der vorliegenden Offenbarung umfasst einen Ringkörper, der bzgl. einer Achse eine rotationssymmetrische Grundform aufweist. Der Ringkörper weist ferner in einem Querschnitt, der in Richtung der Achse liegt, einen Kontaktabschnitt auf. Dieser Kontaktabschnitt ist an einer Stirnseite des Ringkörpers angeordnet, die in Richtung der Achse nach außen weist.

Der Kontaktabschnitt ist derjenige Funktionsbereich des Hartdichtrings, an welchem eine Gleitlauffläche gebildet ist oder wird.

Der Ringkörper weist ferner in dem Querschnitt einen Wannenabschnitt auf, der an einer radialen Mantelfläche des Ringkörpers angeordnet ist und in Bezug auf die Richtung der Achse von dem Kontaktabschnitt abgewandt liegt.

Der Wannenabschnitt ist derjenige Funktionsbereich des Hartdichtrings, an welchem eine Lagerung gegenüber einem Maschinenteil oder einem Bauteil erfolgt, insbesondere mittels eines zusätzlichen Weichdichtrings. Der Wannenabschnitt kann eine beliebige Form haben, insbesondere die Form einer Voll-Wanne mit zweiseitiger Begrenzung bzw. mit zwei seitlichen Stützbereichen haben, oder die Form einer Halb-Wanne mit nur einseitiger Begrenzung bzw. nur einem seitlichen Stützbereich. Der zusätzliche Weichdichtring ist bevorzugt mit dem Hartdichtring verbunden und an dem Wannenabschnitt angeordnet. Der Weichdichtring kann im Wannenabschnitt aufgenommen bzw. eingesetzt sein und zumindest einseitig, bevorzugt zweiseitig durch die Begrenzung des Wannenabschnitts abgestützt oder abstützbar sein.

Mit anderen Worten hat der Ringkörper die Makroform eines Kreisrings und eine profilierte Querschnittsform mit zumindest einem Kontaktabschnitt an einer axialen Stirnseite und einem Wannenabschnitt an einer radialen Mantelfläche.

Der Ringkörper weist an dem Kontaktabschnitt eine Gleitlaufbeschichtung auf. Die Gleitlaufbeschichtung kann die eigentliche Gleitlauffläche des Hartdichtrings bilden. Sie kann in Ihren Eigenschaften auf einen gewünschten Anwendungsfall angepasst sein. Auf diese Weise kann der Ringkörper an sich aus einem Material gefertigt werden, das anderen oder geringeren Anforderungen unterliegt, insbesondere hinsichtlich der erreichbaren Härte (Oberflächen-Härte), Verschleißbeständigkeit, mechanischen (Nach-) Bearbeitbarkeit, Elastizität, Temperaturbelastbarkeit, Wärmeleitfähigkeit usw.

Eine Gleitlauf-Dichtvorrichtung gemäß der vorliegenden Offenbarung umfasst einen ersten Hartdichtring und einen zweiten Hartdichtring, die jeweils einen Kontaktabschnitt aufweisen, wobei die Hartdichtringe in der vorgesehenen Montageposition entlang der Achse zueinander benachbart und zueinander koaxial angeordnet sind, so dass sich die Kontaktabschnitte umlaufend berühren. Zumindest einer der Hartdichtringe weist bevorzugt an dem Kontaktabschnitt eine Gleitlaufbeschichtung auf.

Die Gleitlauf-Dichtvorrichtung wird bevorzugt zur Abdichtung gegen einen Flüssigkeits- und/oder Gas-Austritt an einer Kontaktzone zwischen zwei um die Achse (A) zueinander rotierbaren Bauteilen eingesetzt, wobei die Hartdichtringe im Anlagebereich zwischen den Kontaktabschnitten (3) eine umlaufende dynamische Dichtung bilden. Durch diese Dichtung werden ein erstes Kompartment und ein zweites Kompartment, die in Radialrichtung zueinander benachbart zu beiden Seiten der Paarung von Hartdichtringen liegen, voneinander getrennt. Bei einer Rotation der beiden Bauteile relativ zueinander wird jeweils einer der Hartdichtringe von dem einen Bauteil und der andere Hartdichtring von dem anderen Bauteil mitgenommen, so dass es in Umlaufrichtung um die Achse zu einer Gleitlauf-Berührung mit direkter Anlage und Relativbewegung zwischen den Kontaktabschnitten der Hartdichtringe kommt.

Durch das Vorsehen einer Gleitlaufbeschichtung an dem Kontaktabschnitt zumindest eines der Hartdichtringe können die Gleitlauf-Eigenschaften gezielt verbessert und die Standzeit erhöht werden.

Gemäß einem ersten eigenständigen Aspekt der Offenbarung kann zumindest einer der Ringkörper durch Umformen aus einem abgelängten Ausgansmaterial hergestellt sein, das in Ringform gebogen und an den Enden gefügt ist. Das Ausgangsmaterial kann als gerades oder gebogenes Material, insbesondere als gewickeltes Material auf einem Coil vorliegen.

Ein Hartdichtring gemäß der vorliegenden Offenbarung kann dadurch definiert sein, dass er nach einem bestimmten Verfahren hergestellt ist. Die Offenbarung eines Hartdichtrings, der nach einem bestimmten Verfahren hergestellt ist, steht auch repräsentativ für die Offenbarung des Herstellungsverfahrens an sich, und umgekehrt. Das Herstellungsverfahren kann einen oder mehrere Verfahrensaspekte umfassen, die für sich eigenständige erfinderische Bedeutung haben. Diese Verfahrensaspekte dienen der Herstellung und können für sich allein oder in einer beliebigen Kombination genutzt werden.

Ein erster Verfahrensaspekt zur Herstellung eines Hartdichtrings kann die folgenden Schritte umfassen: Bereitstellen eines Halbzeugs mit einer länglichen oder geraden Erstreckung; Umformen, insbesondere Rollformen, weiter insbesondere Rollprägen des Halbzeugs und Bilden eines Vorproduktes mit einer offenen Ringform; Verbinden der Enden des Vorproduktes zur Bildung eines Ringkörpers mit einer rotationssymmetrischen Grundform in Bezug auf eine Achse (A) und mit einem geschlossenen Umfang.

Die vorgenannte Ausbildung und Herstellungsart eines Hartdichtrings kann für sich allein oder in beliebiger Kombination mit dem Vorsehen einer Gleitlaufbeschichtung genutzt werden. Sie hat den besonderen Vorteil, dass mit nur einer Werkzeugausstattung, insbesondere einem Satz von Rollpräge-Walzen eine große Variantenvielfalt an Hartdichtringen mit beliebig vorgebbaren Durchmessern herstellbar sind. Es bedarf somit nicht der Bereitstellung eines separaten Werkzeuges oder Werkezugsatzes für jede Durchmesser- oder Formgebungsvariante.

Auch das Querschnittprofil des herzustellenden Hartdichtrings kann mit nur einem Werkzeugsatz veränderlich vorgebbar sein, beispielsweise indem die relativen Abstände und Orientierungen der Walzen zueinander adaptiert werden und/oder die Anordnungsreihenfolge der Walzen angepasst wird.

Eine vorteilhafte Weiterbildung des sogenannten Herstellungsaspekts sieht vor, dass das Halbzeug einen Körperbereich aufweist, der am (späteren) Ringkörper den Anlageabschnitt bildet, wobei bereits an dem Körperabschnitt des Halbzeugs vor oder während der Bildung des Ringkörpers zumindest eine erste Beschichtungslage für eine Gleitlaufbeschichtung vorgesehen ist.

Gemäß einem weiteren eigenständigen Aspekt der vorliegenden Offenbarung kann der Ringkörper im Querschnitt eine Kavität aufweisen. Die Kavität kann einerseits abgewandt zum Kontaktabschnitt und andererseits abgewandt zum Wannenabschnitt liegen. In Folge der Kavität kann der Ringkörper mit einem besonders niedrigen Bedarf an Grundmaterial gebildet werden, insbesondere bei gleichen oder sogar erhöhten mechanischen Belastbarkeiten gegen ein Verwinden. Die im Wesentlichen senkrecht zur Axialrichtung verlaufenden Wandabschnitte des Ringkörpers, welche die Kavität begrenzen, bewirken insbesondere eine Versteifung des Querschnitts. Die Kavität kann frei bleiben und beispielsweise im vorgesehenen Betrieb durch ein Gleit- oder Schmiermittel benetzt werden. Dies kann die Wärmeabfuhr gegenüber einem Vollmaterial deutlich verbessern. Alternativ oder zusätzlich kann in der Kavität ein Füllkörper angeordnet sein. Der Füllkörper kann ein separater Körper sein. Er kann aus demselben Grundmaterial gebildet sein wie der Ringkörper. Es kann sich beispielsweise um eine Stützstruktur handeln, die in einem formlosen Herstellungsprozess (3D-Druck) bzw. mit einem additiven Fertigungsverfahren gebildet wird. Alternativ oder zusätzlich kann der Füllkörper ein anderes Material als Grundmaterial des Ringkörpers haben. Der Füllkörper kann insbesondere durch ein günstigeres Material und/oder durch ein Material mit einer geringeren Oberflächenhärte gebildet sein. Alternativ oder zusätzlich kann der Füllkörper durch ein Material mit einer höheren Wärmeleitfähigkeit gebildet sein. Wiederum alternativ oder zusätzlich kann der Füllkörper ein Material umfassen, das die Steifigkeit (den E-Modul) lokal verändert und insbesondere erhöht. Der Füllkörper kann ein passiver Körper sein. Er kann alternativ ein aktiver Körper sein oder einen aktiven Körper umfassen. Ein aktiver Körper kann bspw. ein Sensor oder ein Aktor sein.

Durch das Vorsehen einer Kavität und etwaig eines Füllkörpers können die Eigenschaften des Hartdichtrings hinsichtlich Oberflächenhärte, Elastizität, Gewicht, Wärmeleitfähigkeit und Kosten in weiten Grenzen frei eingestellt werden, ohne einen besonderen Zusatzaufwand hinsichtlich der Herstellungswerkzeuge zu erfordern. Es können insbesondere verschiedenste Formen von Kunststoffen und/oder Metallen je nach Anwendungsbedarf in die Kavität eingebracht werden um einen Füllkörper zu bilden.

Die Bildung einer Kavität ist unabhängig davon, ob der Ringkörper oder sein Vorprodukt teilweise oder vollständig durch Umformen oder Urformen gebildet sind.

Ein weiterer eigenständiger Aspekt der vorliegenden Offenbarung sieht ein Herstellungsverfahren vor, bei dem der Ringkörper des Hartdichtrings (zumindest anteilig) durch Urformen gebildet ist und eine homogene und in Umfangsrichtung fügestellenfreie Ringform aufweist. Der Begriff Urformen umfasst gemäß der vorliegenden Offenbarung sowohl eine formgebundene Herstellung, wie beispielsweise Schleuderguss, Hartguss oder Schwerkraftguss, als auch eine formfreie Herstellung durch additiven Materialauftrag (3D-Druck). Die Herstellung durch Urformen kann mit der oben genannten Herstellungstechnik durch Umformen verbunden werden. Es ist insbesondere möglich, in einem ersten Schritt ein Halbzeug mit einer länglichen oder geraden Erstreckung durch Urformen herzustellen, welches anschließend umgeformt wird zur Bildung eines Vorproduktes mit einer offenen Ringform. Wiederum anschließend können die oben genannten Schritte durchgeführt werden, um eine geschlossene Ringform herzustellen.

Alternativ kann gemäß einer weiteren Ausführungsform der vorliegenden Offenbarung der geschlossene Ringkörper direkt durch Urformen gebildet werden. Etwaig kann in einem weiteren Bearbeitungsschritt durch Umformen der Wannenabschnitt gebildet werden.

Ein weiterer Herstellungsaspekt der Offenbarung sieht vor, dass zumindest die folgenden Herstellungsschritte vorliegen: Bereitstellen einer Negativform mit einer profilierten Kontur und Herstellen eines geschlossenen Ringkörpers durch Urformen, insbesondere durch Gießen, weiter insbesondere durch Aluminium-Druckguss, so dass der Ringkörper eine bzgl. einer Achse rotationssymmetrische Grundform aufweist und in einem Querschnitt, der in Richtung der Achse liegt, einen Kontaktabschnitt aufweist, der in Richtung der Achse (A) an einer nach außen weisenden Stirnseite angeordnet ist, sowie einen Wannenabschnitt, der an einer radialen Mantelfläche des Ringkörpers angeordnet ist und in Bezug auf die Richtung der Achse von dem Kontaktabschnitt abgewandt liegt.

In der Negativform kann bereits vor oder während des Urformprozesses ein ringförmiges Zusatzmaterial eingebracht werden, das eine Gleitlaufbeschichtung an dem Kontaktabschnitt bildet. Alternativ oder zusätzlich kann ein Zusatzmaterial eingebracht werden, das den E-Modul lokal verändert und insbesondere erhöht.

Ein weiterer eigenständiger Aspekt der vorliegenden Offenbarung sieht vor, dass an dem Ringkörper in einem radialen Oberflächenabschnitt, der zwischen einerseits dem Wannenabschnitt und andererseits dem Kontaktabschnitt liegt, insbesondere an einer radialen Umfangsfläche des Bunds, eine Schutzbeschichtung vorgesehen ist. Die Schutzbeschichtung kann zumindest anteilig aus demselben Material bestehen, wie die Gleitlaufbeschichtung am Kontaktabschnitt. Alternativ kann sie aus einem anderen Material gebildet sein. Die Schutzbeschichtung kann ein- oder mehrlagig, insbesondere zweilagig ausgebildet sein. Es hat sich in der Praxis gezeigt, dass in der Einbaulage zwar meistens eine Materialschädigung im Bereich der Gleitlaufbeschichtung bzw. im Bereich der Kontaktzone die Lebensdauer des Hartdichtrings beschränkt. In einzelnen Fällen kommt es jedoch auch zum Eintrag von Fremdstoffen und insbesondere harten Partikeln in einen Bereich zwischen einem Gehäuseteil und dem radialen Oberflächenabschnitt am Ringkörper, der zwischen einerseits dem Wannenabschnitt und andererseits dem Kontaktabschnitt liegt, insbesondere an einer radialen Umfangsfläche des Bunds. Das Aufbringen einer Schutzbeschichtung auf diesen Bereich macht den Hartdichtring resistenter gegen mechanische Einflüsse durch solche Fremdstoffe, was die Ausfallsicherheit des Hartdichtrings verbessert und eine genauere Prognose der erreichbaren Standzeit gestattet.

Ein weiterer eigenständiger Aspekt der vorliegenden Offenbarung sieht vor, dass an der radialen Mantelfläche des Ringkörpers, insbesondere im Bereich des Wannenabschnitts, in der Axialrichtung zueinander benachbarte Oberflächenabschnitte mit einer unterschiedlichen Haftvermittlungswirkung vorliegen. Bevorzugt ist an dem Wannenabschnitt ein in der Axialrichtung begrenzter Oberflächenabschnitt vorgesehen, der nur einen Teil des Wannenabschnitts bedeckt, wobei dieser Oberflächenabschnitt eine erhöhte Haftvermittlungswirkung gegenüber einem dort aufsetzbaren Weichdichtring hat, insbesondere durch das Vorliegen eines haftvermittelnden Zusatzmaterials und/oder durch das Vorliegen einer haftvermittelnden Oberflächenstruktur. Ein haftvermittelndes Zusatzmaterial kann beispielsweise ein Beschichtungsmaterial sein, das sich von dem Grundmaterial des Ringkörpers unterscheidet. Eine haftvermittelnde Oberflächenstruktur kann beispielsweise eine Aufrauhung oder eine Oberflächen-Texturierung sein. Der Hartdichtring wird in der vorgesehenen Montageposition durch einen Weichdichtring gelagert. Es hat sich gezeigt, dass ein Fehlfunktion oder ein vorzeitiger Verschleiß des Hartdichtrings auftreten kann, wenn der Weichdichtring in der Montagelage eine lokale Verdrillung oder Fehlpositionierung aufweist. Eine solche Verdrillung oder Fehlpositionierung entsteht etwaig beim Einsetzen des Hartdichtrings in das Gehäuse. Durch die lokal unterschiedliche Haftvermittlungswirkung und insbesondere durch eine gesteigerte Haftvermittlungswirkung an dem vorgenannten Oberflächenabschnitt wird erreicht, dass ein Weichdichtring, der auf dem Wannenabschnitt aufgesetzt ist, beim Einsetzen in ein Gehäuse eine kontrollierte und gleichförmige Rollbewegung zwischen einerseits dem Wannenabschnitt und andererseits dem Gehäuse ausführt. Hierdurch werden ein Verdrillen des Weichdichtrings vermieden und eine korrekte Positionierung in der Montagelage begünstigt oder sichergestellt. Auch dies verbessert die Ausfallsicherheit des Hartdichtrings und gestattet eine genauere Prognose der erreichbaren Standzeit.

Ein weiterer eigenständiger Aspekt der vorliegenden Offenbarung sieht vor, dass die Gleitlaufbeschichtung mehrlagig ausgebildet ist und insbesondere zwei oder mehr separate Beschichtungslagen aufweist, die sich in Richtung der Achse überlagern. Die mehrlagige Ausbildung kann sowohl hinsichtlich der physischen Ausbildung als auch hinsichtlich der Herstellungsart verschiedene Ausprägungen haben, die beliebig miteinander kombinierbar sind.

Alternativ oder zusätzlich kann vorgesehen sein, dass die Gleitlaufbeschichtung mindestens eine gradierte Beschichtungslage mit einer inhomogenen Materialstruktur aufweist. Die Materialstruktur der gradierten Beschichtungslage kann insbesondere im Querschnitt und in Richtung der Achse mindestens zwei Zonen und weiter insbesondere eine Mehrzahl von Zonen aufweisen, in denen unterschiedliche Materialgemische und/oder unterschiedliche Konzentrationen von Hartpartikeln und/oder Selbstschmierstoffen vorliegen. So kann beispielsweise in einer ersten Zone, die in Richtung der Achse nahe zum Ringkörper liegt, eine hohe Konzentration von Hartpartikeln vorgesehen sein, um Dauergleiteigenschaften zu erzeugen. In einer zweiten Zone, die in Richtung der Achse von dem Ringkörper entfernt liegt, insbesondere in einer äußeren Randzone der Gleitlaufbeschichtung, kann eine hohe Konzentration von Selbstschmierstoffen vorliegen, um Einlauf-Eigenschaften zu erzeugen. Zwischen diesen Zonen kann ein gradueller Übergang der Konzentration(en) der Hartpartikel und/oder der Selbstschmierstoffe vorliegen. Der graduelle Übergang kann fließend sein oder aufgeteilt nach weiteren Zwischen-Zonen.

Gemäß einer ersten Ausprägung ist vorgesehen, dass die Gleitlaufbeschichtung eine verschleißbeständige Dauergleitschicht und andererseits eine separate Einlaufschicht umfasst. Bevorzugt ist die Einlaufschicht in Überlagerung zur verschleißbeständigen Dauergleitschicht angeordnet. Alternativ kann sie neben oder überlappend zur Dauergleitschicht vorgesehen sein.

Gemäß einer weiteren Ausprägung kann eine erste Beschichtungslage an einem Halbzeug oder an einem Vorprodukt aufgebracht werden, das zu einem in Umlaufrichtung geschlossenen Ringkörper gefügt wird, wobei erst nach dem Fügen mind. eine weitere Beschichtungslage der Gleitlaufbeschichtung aufgebracht wird.

Auf diese Weise kann mit der zumindest einen weiteren Beschichtungslage eine Fügestelle in Umfangsrichtung überdeckt oder kaschiert werden. Vorzugsweise können für den Umformprozess zur Bildung des Ringkörpers etwas geringere Toleranzanforderungen vorgesehen sein, ohne die Dichtwirkung und die Rundlaufeigenschaften negativ zu beeinträchtigen.

Ein weiterer eigenständiger Aspekt der vorliegenden Offenbarung sieht vor, dass der Wannenabschnitt einen Mittelbereich und mind. einen angrenzenden seitlichen Stützbereich umfasst, der in Richtung der Achse auf der vom Kontaktabschnitt entfernten Seite des Mittelbereichs gelegen ist, wobei dieser seitliche Stützbereich durch einen Kragen gebildet ist.

Gemäß einer ersten Ausprägung kann die Längserstreckung des Kragens im Querschnitt um einen Faktor x größer sein als seine Dicke, wobei x mind. 1,5 beträgt und bevorzugt zwischen 2 und 4 liegt. Der Kragen hat hierdurch eine im Wesentlichen flache und schmalwandige Hohlzylinderform, so dass der Kragen mit einfachen Mitteln einer weiteren Bearbeitung durch Umformen unterzogen werde kann und zwar unabhängig davon, ob der Ringkörper ursprünglich durch Umformen oder Urformen hergestellt worden ist. Der Kragen kann insbesondere zunächst im Querschnitt eine Längserstreckung aufweisen, die in Richtung der Achse orientiert ist. Mit anderen Worten kann es sich um einen Axial-Kragen handeln.

Gemäß einer weiteren Ausprägung, die für sich allein oder in Kombination mit der vorgenannten Ausprägung nutzbar ist, kann der seitliche Stützbereich des Wannenabschnitts für eine vorgesehene Montagelage gegenüber einer Ausgangsform bei der Herstellung des Ringkörpers zusätzlich gebogen oder gebördelt sein, so dass seine Längserstreckung im Querschnitt stärker zum Wannenabschnitt hin geneigt ist. Durch dieses zusätzliche Biegen oder Bördeln des seitlichen Stützbereichs, insbesondere eines Kragens, sind verschiedene Vorteile erzielbar. Einerseits kann eine Anpassung des Hartdichtrings an unterschiedliche Formen eines Weichdichtrings vorgenommen werden, über welchen der Hartdichtring an einem Bauteil lagerbar ist. Weiterhin kann über die zusätzliche Umformung des seitlichen Stützbereichs durch Biegen oder Bördeln die wirksame Breite des Wannenabschnitts angepasst oder eingestellt werden. Somit lässt sich ein Hartdichtring für eine Paarung mit einer Auswahl an Weichdichtringen für verschiedenste Anwendungsoptionen gezielt adaptieren.

Die vorgenannten Ausprägungen sind bei einem durch Urformen hergestellten Ringkörper bevorzugt dadurch begleitet, dass an dem Ringkörper auf der von dem Wannenabschnitt (5) wegweisenden Seite des seitlichen Stützbereichs eine Hinterschneidung gebildet ist. Die Hinterschneidung ist bevorzugt derart vorgesehen, dass die Materialdicke im Bereich des seitlichen Stützbereichs deutlich geringer ausfällt als im Mittelbereich des Wannenabschnitts.

Zusammenfassend wird durch die vorliegende Offenbarung also eine Technik zur Bereitstellung von Hartdichtringen aufgezeigt, mit welcher eine modulare Herstellbarkeit erzielt wird, die sowohl eine günstige Großmengenherstellung (Druckguss) als auch eine Herstellung von Einzelstücken oder geringen Stückzahlen für Spezialanwendungen gestattet, bei höchster Anpassbarkeit der Hartdichtringe an die jeweiligen Anwendungserfordernisse.

In den Unteransprüchen der nachfolgenden Beschreibung sowie den beigefügten Zeichnungen sind weitere vorteilhafte Ausbildungen der Offenbarung erläutert.

Die Erfindung ist in den Zeichnungen beispielhaft und schematisch dargestellt. Diese zeigen:
- Figur 1:: Eine Schnittdarstellung einer Baugruppe mit einer Gleitlauf-Dichtvorrichtung gemäß der vorliegenden Offenbarung in der vorgesehenen Montageposition;
- Figur 2:: Eine vergrößerte Detaildarstellung eines Ausschnitts von Figur 1;
- Figur 3:: Eine Gleitlauf-Dichtvorrichtung gemäß der vorliegenden Offenbarung und einer Explosionsdarstellung;
- Figur 4:: Eine vergrößerte Teilansicht analog zu Figur 3 in einer alternativen Ausbildung;
- Figur 5:: Eine vergrößerte Querschnitt-Darstellung eines Hartdichtrings in einer ersten Ausführungsvariante;
- Figur 6:: Eine zweite Ausführungsform einer Gleitlauf-Dichtvorrichtung mit einer weiteren Ausbildung der Hartdichtringe;
- Figur 7:: Eine vergrößerte Querschnittdarstellung eines Hartdichtrings gemäß Figur 6;
- Figur 8:: Eine schematische Darstellung eines Herstellungsverfahrens gemäß der vorliegenden Offenbarung;
- Figur 9:: Eine Querschnittdarstellung einer weiteren Ausführungsvariante eines Hartdichtrings;
- Figuren 10 und 11:: Weitere Ausführungsvarianten einer Gleitlauf-Dichtvorrichtung in Querschnittdarstellung;
- Figur 12:: Eine Querschnittdarstellung eines Hartdichtrings gemäß Figur 10 in Einzeldarstellung;
- Figur 13:: Eine schematische Darstellung eines Herstellungsverfahrens gemäß der vorliegenden Offenbarung;
- Figuren 14a-14c:: Querschnittansichten verschiedener Halbzeuge;
- Figuren 15 und 16:: Querschnittansichten eines Hartdichtrings und eines Weichdichtrings in verschiedenen Zuständen beim Einsetzen in ein Bauteil.

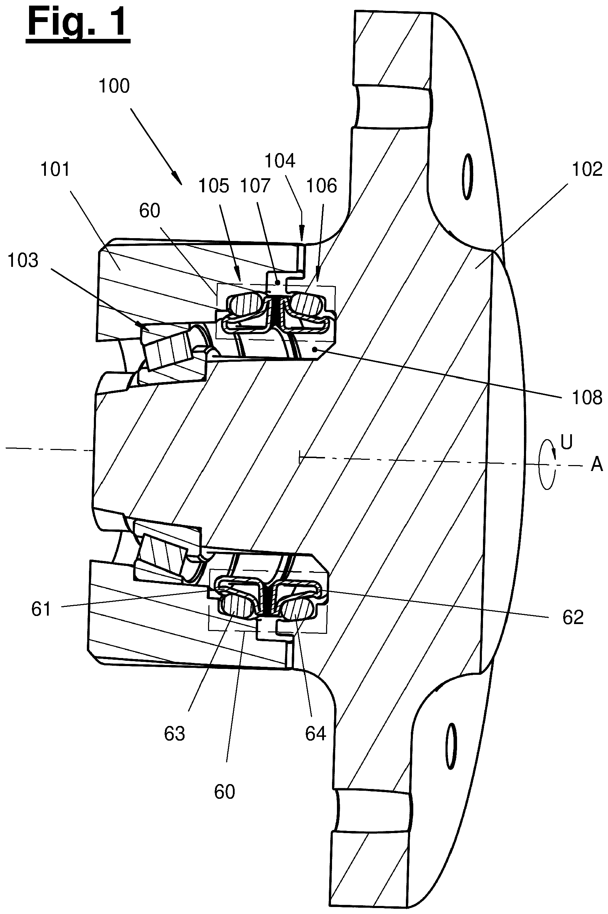

Figur 1 zeigt eine bevorzugte Ausführungsvariante einer Gleitlauf-Dichtvorrichtung (60) in einer vorgesehenen Montageposition an einer Baugruppe (100). Die Baugruppe (100) umfasst ein erstes Bauteil (101) und ein zweites Bauteil (102), die relativ zueinander um eine Achse (A) gelagert sind. Die Lagerung erfolgt hier beispielhaft durch ein rotatorisches Lager (103), insbesondere ein Zylinderrollenlager.

Zwischen den Bauteilen (101,102) ist ein Spalt (104) gebildet, der sich zumindest anteilig in einer Radialebene in Bezug auf die Achse (A) erstreckt. Durch diesen Spalt (104) könnte ein Flüssigkeits- oder Gastransfer zwischen dem Innenraum und dem Außenraum der Baugruppe (100) erfolgen. Um einen solchen Transfer zu verhindern oder zu beschränken ist zwischen den Bauteilen (101,102) eine Gleitlauf-Dichtvorrichtung (60) gemäß der vorliegenden Offenbarung angeordnet.

Die Gleitlauf-Dichtvorrichtung (60) umfasst einen ersten Hartdichtring (61) und einen zweiten Hartdichtring (62), die in der gezeigten, vorgesehenen Montageposition entlang der Achse (A) zueinander benachbart und zueinander koaxial angeordnet sind.

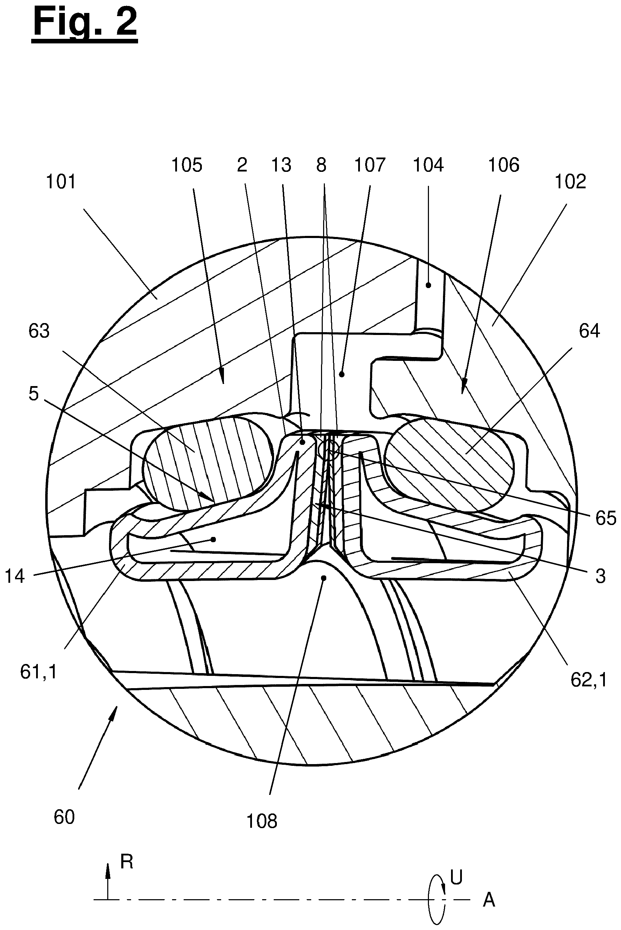

Figur 2 zeigt eine vergrößerte Detailansicht der oberen Hälfte der Gleitlauf-Dichtvorrichtung (60) gemäß Figur 1.

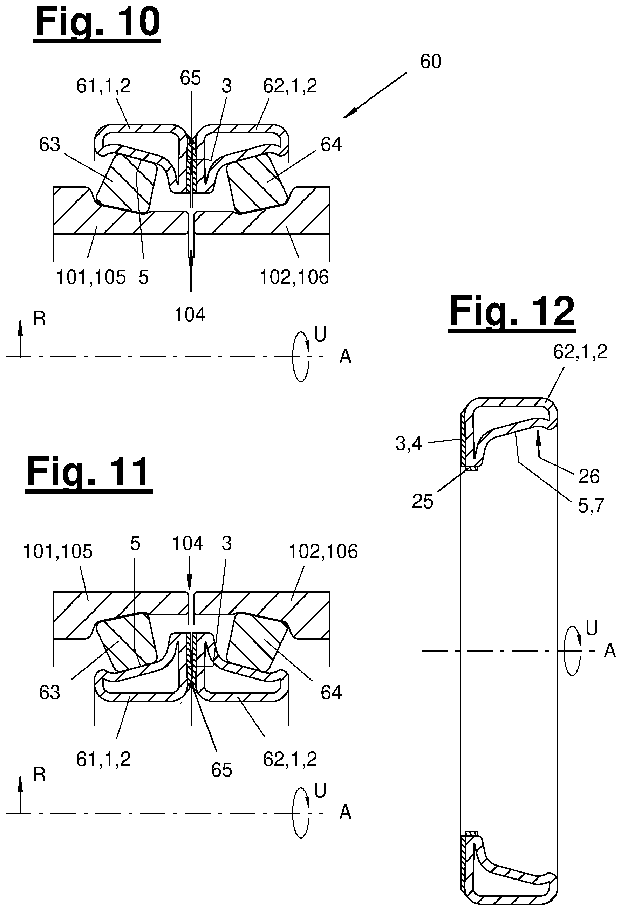

Mindestens einer und bevorzugt beide Hartdichtringe (61,62) sind gemäß der vorliegenden Offenbarung ausgebildet. Ein solcher Hartdichtring (61,62) umfasst einen Ringkörper (2,2'), der bzgl. der Achse (A) eine rotationssymmetrische Grundform hat. Der Ringkörper hat in einem Querschnitt (Q), der in Richtung der Achse (A) liegt, einen Kontaktabschnitt (3), der an einer Stirnseite des Ringkörpers (2,2') angeordnet ist, wobei der Kontaktabschnitt (3) in Richtung der Achse (A) nach außen weist. Ferner umfasst der Ringkörper (2,2') im Querschnitt (Q) einen Wannenabschnitt (5), der an einer radialen Mantelfläche des Ringkörper (2,2') angeordnet ist und in Bezug auf die Richtung der Achse (A) von dem Kontaktabschnitt (3) abgewandt liegt. In den Beispielen der Figuren 1 bis 7 ist der Wannenabschnitt (5) auf einer in Radialrichtung nach außen hin weisenden Mantelfläche des Ringkörpers (2,2') angeordnet. Figur 10 zeigt ein alternatives Ausführungsbeispiel, bei dem der Wannenabschnitt (5) an einer in Radialrichtung nach innen hin liegenden Mantelfläche des Ringkörpers (2,2') angeordnet ist.

Der Ringkörper (2,2') weist an dem Kontaktabschnitt (3) eine Gleitlaufbeschichtung (8) auf. Die Gleitlaufbeschichtung (8) kann einlagig oder bevorzugt mehrlagig ausgebildet sein. Sie kann insbesondere zwei oder mehr separate Beschichtungslagen (9,10) aufweisen, die sich in Richtung der Achse (A) zumindest anteilig überlagern.

An den Bauteilen (101,102) können beliebig geeignet geformte Dichtungsaufnahmen (105,106) vorgesehen sein. Eine Dichtungsaufnahme (105,106) kann beispielsweise die Grundform einer Ringnut mit einer schräg geneigten Mantelfläche haben. Sie kann alternativ beliebig anders ausgebildet sein.

Die Gleitlauf-Dichtvorrichtung (60) gemäß der vorliegenden Offenbarung umfasst bevorzugt mind. einen und weiter bevorzugt zwei Weichdichtringe (63,64). Die Weichdichtringe können beispielsweise die Form eines O-Rings (Figuren 1 bis 7) oder eines Trapez-Rings (vgl. Figuren 10 bis 11) haben. Sie dienen einerseits zur Lagerung je eines Hartdichtrings (63,64) in einer zugehörigen Dichtungsaufnahme (105,106) eines Bauteils (101,102) und andererseits zur statischen Abdichtung jeweils zwischen dem Bauteil (101,102) und dem Hartdichtring (63,64).

Bei einer relativen Rotation zwischen den Bauteilen (101,102) wird jeweils einer der Hartdichtringe (63,64) bei der Drehbewegung des jeweiligen Bauteils (101,102) mitgenommen. Somit findet in Umlaufrichtung keine oder nur eine sehr geringe Relativbewegung zwischen dem jeweiligen Hartdichtring (63,64) und dem Bauteil (101,102) statt.

Die Hartdichtringe (63,64) berühren sich jedoch umlaufend über die jeweiligen Kontaktabschnitte (3), so dass zwischen den Hartdichtringen (63,64) und weiter insbesondere zwischen den Kontaktabschnitten (3) ein durch Körperkontakt geschlossener Anlagebereich (65) gebildet ist.

Bei einer Bewegung der Bauteile (101,102) gleiten somit die Hartdichtringe (63,64) in Umfangsrichtung aufeinander und bilden im Anlagebereich (65) eine dichtende Barriere. Diese Barriere trennt ein erstes Kompartment (107) von einem zweiten Kompartment (108), die jeweils in Radialrichtung benachbart zueinander außerhalb und innerhalb der Gleitlauf-Dichtvorrichtung (60) liegen. In dem Beispiel von Figuren 1 und 2 ist das erste Kompartment (107) in Radialrichtung außerhalb der Gleitlauf-Dichtvorrichtung (60) und in Axialrichtung zwischen den Stirnflächen der Bauteile (101,102) gebildet. Das erste Kompartment kann mit dem Spalt (104) identisch sein oder mit dem Spalt (104) kommunizieren.

Das zweite Kompartment (108) ist in der Radialrichtung innerhalb der Gleitlauf-Dichtvorrichtung (60) gebildet.

Zumindest eines der Kompartmente kann bevorzugt ein Gleit- und/oder Kühl-Mittel aufnehmen, beispielsweise ein Getriebeöl oder einen anderen üblichen Schmierstoff. Bei einer Relativbewegung der Hartdichtringe (63,64) wird dieses Gleit- und/oder Kühl-Mittel bevorzugt durch Körperkontakt mitgenommen und auf den Kontaktabschnitten (3) bzw. den Gleitlaufbeschichtungen (8) verteilt. Alternativ kann die Gleitlauf-Dichtvorrichtung als ungeschmierte Beschichtung vorliegen.

Nachfolgend werden verschiedene Ausführungsarten eines Hartdichtrings (1) erläutert, die in beliebiger Weise miteinander kombinierbar sind. Insbesondere können in einer Gleitlauf-Dichtvorrichtung zwei unterschiedliche Hartdichtringe (1) oder zwei übereinstimmende Hartdichtringe (1) kombiniert sein.

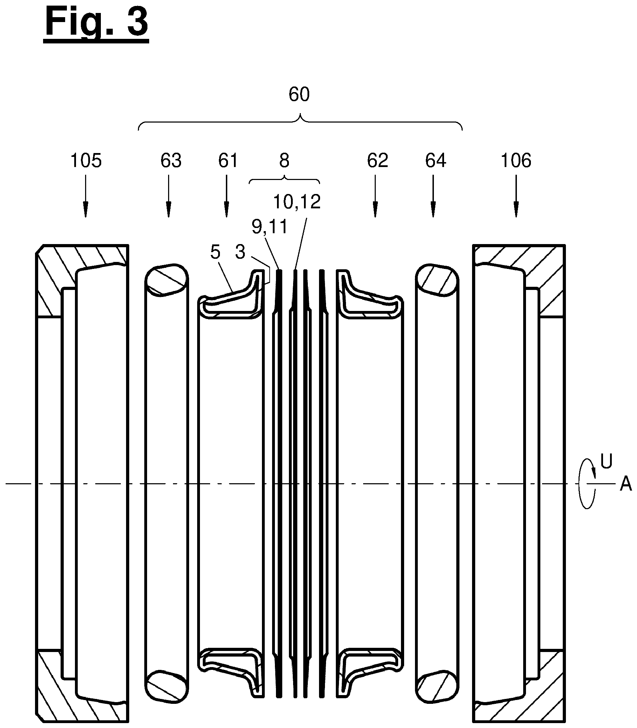

Figur 3 zeigt eine Gleitlauf-Dichtvorrichtung (60) gemäß einer ersten Ausführungsvariante in einer Explosionsdarstellung.

In diesem Beispiel weist jeder der Hartdichtringe (1) eine mehrlagige Gleitlaufbeschichtung (8) auf. Diese besteht jeweils aus einer ersten Beschichtungslage (9), die direkt auf den Ringkörper (2,2') und insbesondere den Kontaktabschnitt (3) aufgebracht ist. Weiterhin umfasst die Gleitlaufbeschichtung (8) jeweils eine zweite Beschichtungslage (10), die in Überlagerung zu der ersten Beschichtungslage (9) aufgebracht ist. Die zweite Beschichtungslage kann bevorzugt die erste Beschichtungslage in Umfangsrichtung und/oder in Radialrichtung vollständig überdecken. Alternativ kann eine nur teilweise Überdeckung vorgesehen sein. Die Gleitlaufbeschichtung (8) umfasst bevorzugt eine verschleißbeständige Dauergleitschicht (11), die auch als Gleitlaufschicht gezeichnet werden kann. Die Dauergleitschicht (11) ist besonders bevorzugt die erste Beschichtungslage (9). Gemäß einer bevorzugten Ausführung hat die Gleitlaufbeschichtung (8) und insbesondere die Gleitlaufschicht (11) eine Härte von mind. 400 HV (Vickers-Härte), weiter insbesondere mehr als 700 HV oder mehr als 800 HV.

Die Dauergleitschicht (11) kann einen beliebigen Aufbau haben und auf beliebige Weise hergestellt sein. Besonders bevorzugt ist sie durch ein Metall-Matrix-Komposit gebildet, das eine Bindematrix mit eingelagerten Hartpartikeln umfasst. Die eingelagerten Hartpartikel können mind. einen oder mehrere der folgenden Stoffe umfassen:
- Karbide, insbesondere Metallkarbide, weiter insbesondere
   ∘ Chromkarbide;
   ∘ Eisenkarbide;
   ∘ Wolframkarbide;
   ∘ Titankarbide;
   ∘ Siliziumkarbide,
- Oxide, insbesondere Metalloxide, weiter insbesondere
   ∘ Aluminiumoxide;
   ∘ Zirkonoxide;
- Nitride, insbesondere Metallnitride, weiter insbesondere
   ∘ Bornitride.

Die Bindematrix kann bevorzugt gebildet sein aus einer Nickel-Basis und/oder einer Nickel-Chrom-Basis und/oder einer Kobalt-Basis und/oder einer Eisenbasis.

Gemäß einer weiteren bevorzugten Ausbildung, die mit den vorgenannten Merkmalen kombinierbar ist, kann die Dauergleitschicht (11) einen zusätzlichen Selbstschmierstoff beinhalten, der insbesondere mind. einen der folgenden Stoffe oder deren Verbindung umfasst:
- Molybdän;
- Kupfer;
- Molybdänsulfid;
- Bronze;
- Messing;
- Grafit;
- Bornitrit (insbesondere hexagonales Bornitrit)
- PTFE.

Eine separate Einlaufschicht (12) kann bevorzugt Grafit oder ein Weichmetall wie Kupfer, Zink, Zinn oder Aluminium umfassen. Das Weichmetall kann in Reinform oder als Legierung enthalten sein. Alternativ oder zusätzlich kann eine Einlaufschicht (12) Grafit oder ein Weichmetall wie Blei, Kupfer, Zink, Zinn oder Aluminium in einer Metallmatrix umfassen, beispielsweise Grafit in einer Nickel-Matrix oder Blei in einer Nickel-Matrix.

Die Einlaufschicht (12) kann bei der Inbetriebnahme der Gleitlauf-Dichtvorrichtung im Anlagebereich (65) relativ schnell lokal abgetragen werden, so dass sich an den in Kontakt stehenden Hartdichtringen (61,62) zueinander vollkommen plan laufende Oberflächenabschnitte ausbilden. Durch das Abtragen der Einlaufschicht können sich weiter die Hartdichtringe (61,62) in der Axialrichtung (A) in Mikrobetrachtung aneinander annähern, so dass nach und nach die dahinter liegenden verschleißbeständige Dauergleitschichten (11) zueinander in Kontakt treten, welche eine deutlich höhere dynamische Standfestigkeit haben.

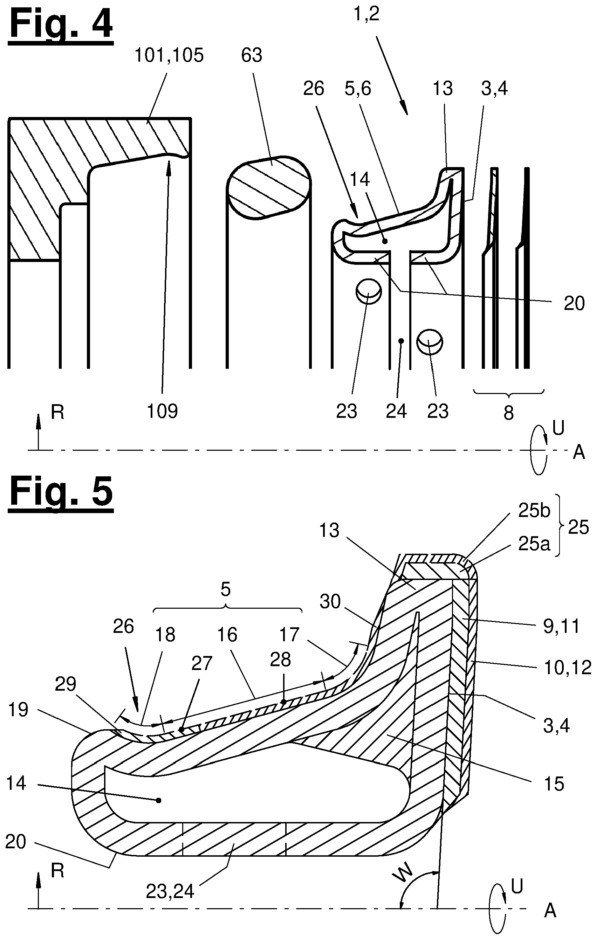

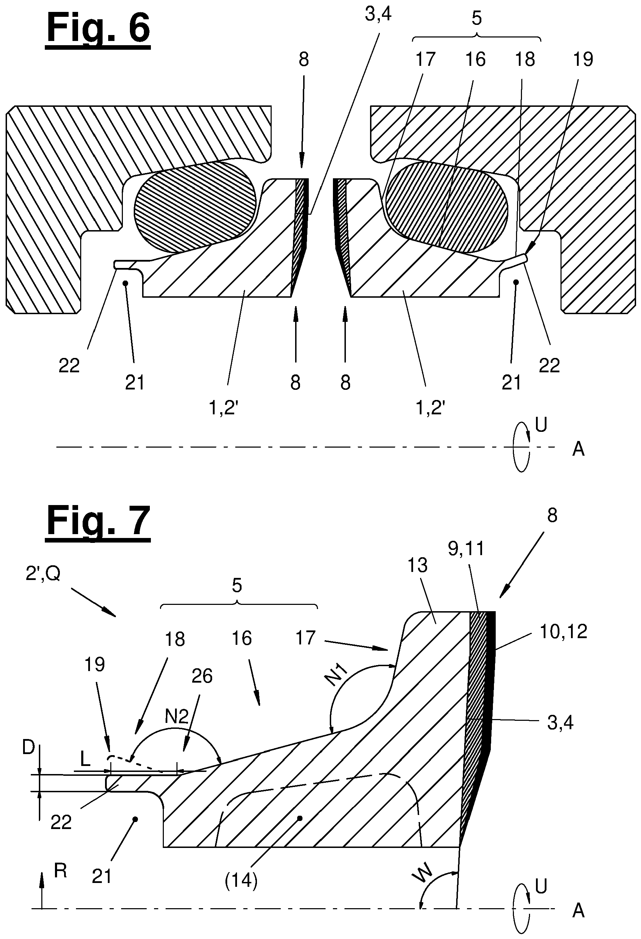

Gemäß der beispielhaften Darstellung in Figuren 5 und 7 kann der Kontaktabschnitt (3) im Querschnitt (Q) gegenüber der Achse (A) um einen Winkel (W) geneigt sein, wobei dieser Winkel (W) bevorzugt zwischen 80° (Winkelgrad) und 89,5° beträgt oder wobei der Winkel (W) zwischen 90,5° und 100° beträgt. Mit anderen Worten weicht der Neigungswinkel bevorzugt um ein vorgegebenes Mindestmaß von einem rechten Winkel ab.

Dementsprechend stehen sich die Kontaktabschnitte (3) bevorzugt in der vorgesehenen Montageposition im Anlagebereich (65) als leicht zueinander geneigte Flächen entgegen, zwischen denen ein geringer Öffnungswinkel verbleibt, der besonders bevorzugt im Bereich von 0,5 Winkelgrad bis 3 Winkelgrad liegt. Alternativ kann der Öffnungswinkel größer sein.

Durch den Öffnungswinkel wird erreicht, dass mit fortschreitender Nutzungsdauer und einem entsprechenden Verschleiß der Gleitlaufbeschichtung (8) sich die Hartdichtringe (61,62) in der Mikrobetrachtung immer weiter entlang der Achse (A) annähern können, wobei der Anlagebereich (65) zwischen den Kontaktabschnitten (3) in der Radialrichtung nach innen oder außen verlagert wird, je nachdem wie die Winkel (W) gewählt sind. In dem Beispiel von Figur 2 ist der Anlagebereich (65) bei der Inbetriebnahme in Radialrichtung außen zwischen den Kontaktabschnitten (3) gebildet und wandert nach und nach in Radialrichtung nach innen. Im Beispiel von Figur 11 liegt der umgekehrte Fall vor.

Die Ringkörper (2,2') können grundsätzlich aus einem beliebigen umformbaren oder urformbaren Werkstoff gebildet sein. Besonders bevorzugt sind sie aus einem Metallwerkstoff gebildet, weiter bevorzugt aus Aluminium oder einem Eisenwerkstoff. Die Auswahl des Materials kann vom vorgesehenen Anwendungszweck abhängen. Alternativ oder zusätzlich kann ein Ringkörper (2, 2') aus einem Kunststoff gebildet sein. Ferner ist eine Herstellung durch formgebendes Compositbildungsverfahren möglich, bspw. zur Bildung eines Faserverbunds durch Laminieren.

Der Ringkörper (2,2') weist im Querschnitt (Q) bevorzugt an dem Wannenabschnitt (5) auf der Seite die zu dem Kontaktabschnitt (3) hin gewandt ist einen Bund (13) auf. Der Bund (13) kann insbesondere ein Ringbund sein, weiter insbesondere ein Radialringbund. Er kann mit einem seitlichen Stützbereich (17) des Wannenabschnitts (5) verbunden sein oder separat vorliegen. Der Bund (13) kann bevorzugt dazu dienen, in der vorgesehenen Einbauposition gegenüber der zugehörigen Dichtungsaufnahme (105,106) einen nur schmalen ringförmigen Spalt offenzulassen, so dass ein Übertritt von Fremdstoffen aus dem Kompartment (107) in Richtung des Wannenabschnitts (5) und des bevorzugt dort angeordneten Weichdichtrings (63,64) verhindert oder beschränkt wird.

Der Wannenabschnitt (5) des Ringkörpers (2,2') weist bevorzugt einen Mittelbereich (16) mit einer im Querschnitt (Q) ebenen Kontur auf, wobei der Mittelbereich (16) eine Sitzfläche zur Aufnahme eines Weichdichtrings (63,64) bildet. Der Mittelbereich (16) kann eine gegenüber der Axialrichtung (A) geneigte Lage haben. Die Neigung des Mittelbereichs (16) gegenüber der Achse (A) kann insbesondere zwischen 1 ° (Winkelgrad) und 30° betragen, oder etwaig darüber. Alternativ kann der Mittelbereich (16) parallel zur Achse (A) ausgerichtet seind.

Weiterhin weist der Wannenabschnitt (5) bevorzugt im Querschnitt einen (den) Mittelbereich (16) und mind. einen direkt angrenzenden seitlichen Stützbereich (17,18) auf. Figuren 5, 7 und 9 zeigen weitere Details zur Formgebung des Wannenabschnitts.

Der Wannenabschnitt (5) kann einen (ersten) seitlichen Stützbereich (17) aufweisen, der in Richtung der Achse (A) auf dem zum Kontaktabschnitt (3) hin weisenden Seite des Mittelbereichs (16) gelegen ist. Der Wannenabschnitt (5) kann alternativ oder zusätzlich einen (zweiten) seitlichen Stützbereich (18) aufweisen, der in Richtung der Achse (A) auf der vom Kontaktabschnitt (3) entfernten Seite des Mittelbereichs (16) gelegen ist.

Durch den einen oder die beiden seitlichen Stützbereiche (17,18) wird ein Bewegungsbereich des Weichdichtrings (63,64) beschränkt bzw. eine Anlagefläche gebildet, über welche Lagerkräfte in Richtung der Lagerkräfte in Richtung der Achse (A) zwischen dem Bauteil (101,102) bzw. der Dichtungsaufnahme (105,106) und dem Hartdichtring (61,62) mittels des Weichdichtrings (63,64) übertragbar bzw. abstützbar sind.

Der mindestens eine seitliche Stützbereich (17,18) ist dementsprechend bevorzugt gegenüber dem Mittelbereich (16) geneigt, insbesondere bei einem stumpfen Neigungswinkel (N1 ,N2). Alternativ kann ein anderer Betrag des Neigungswinkels (N1, N2) vorliegen, insbesondere ein rechter Winkel.

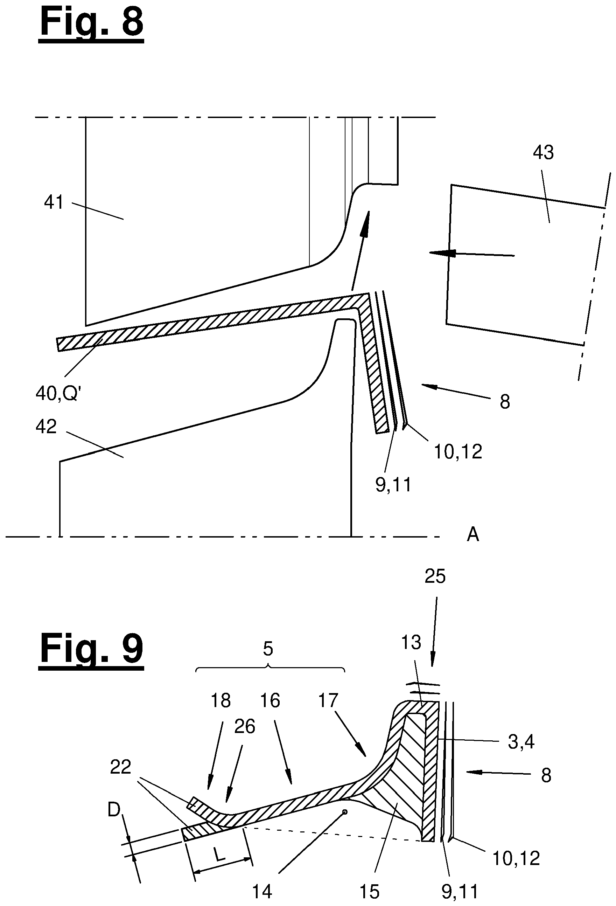

Die Stärke der Neigung (N1 ,N2) sowie eine Längserstreckung (L) des zweiten seitlichen Stützbereichs (18), der in Richtung der Achse (A) auf der vom Kontaktabschnitt (3) entfernten Seite des Mittelbereichs (16) gelegen ist, haben einen erheblichen Einfluss auf die Variantenvielfalt der Weichdichtringe (63,64), die mit einem jeweiligen Hartdichtring (61,62) nutzbar sind. Die Wahl des Weichdichtrings (63,64) hängt andererseits häufig von den Einsatzbedingungen sowie dem verfügbaren Bauraum ab. Es ist daher vorteilhaft, den Wannenabschnitt (5) zumindest im Bereich des (zweiten) seitlichen Stützbereichs adaptierbar auszubilden, in dem eine Formveränderlichkeit zugelassen wird. Die Formveränderlichkeit kann insbesondere dadurch geschaffen werden, dass der (zweite) seitliche Stützbereich (18) durch einen Kragen (22) gebildet wird (vgl. Figuren 6 bis 9). Dieser Kragen (22) kann bevorzugt eine Längserstreckung (L) im Querschnitt (Q) haben, die um einen Faktor x größer ist als seine Dicke (D), d.h. mit L=x*D. Der Faktor x beträgt dabei mindestens 1,5 und weiter bevorzugt zwischen 2 und 4. Es kann insbesondere vorgesehen sein, dass ein Hartdichtring für einen bestimmten Anwendungszweck angepasst wird, in dem der Kragen (22) umgeformt wird. Besonders bevorzugt kann der (zweite) seitliche Stützbereich (18) für eine vorgesehene Montagelage gegenüber der Ausgangsform zusätzlich gebogen oder gebördelt sein, so dass seine Längserstreckung (L) im Querschnitt (Q) stärker zum Wannenabschnitt (5) hingeneigt ist (als dies in der Ausgangslage der Fall war). In dem Beispiel von Figur 9 ist ein Ringkörper (2) durch Umformung gebildet, insbesondere durch ein Verfahren zum Rollenprägen eines Halbzeugs (40), auf welches weiter unten noch im Detail eingegangen wird. Hier ist der (zweite) seitliche Stützbereich (18) in einer Ausgangsform als ein Axial-Kragen (22) gebildet, dessen Längserstreckung (L) im Querschnitt (Q) in Richtung der Achse (A) verläuft oder kollinear zur Erstreckung des Mittelbereichs (16) orientiert ist. Aus dieser Ausgangsform kann der Kragen (22) durch einen weiteren Umformungsschritt in die ebenfalls in Figur 9 gezeigte stärker zum Wannenabschnitt (5) hin geneigte Lage umgeformt werden.

In dem Beispiel von Figur 7 ist ein Ringkörper (2') gezeigt, der durch Urformung gebildet ist, insbesondere durch Gießen eines Metallwerkstoffes weiter insbesondere durch Aluminium-Druckguss. Der Ringkörper (2') weist hier auf der vom Wannenabschnitt (5) wegweisenden Seite des (zweiten) seitlichen Stützbereichs (18) eine Hinterschneidung (21) auf, so dass ebenfalls ein Kragen (22), insbesondere ein Axial-Kragen (22) mit einer dünnwandigen hohlzylindrischen Grundform stehen bleibt. Die Längserstreckung (L) dieses Axial-Kragen (22) ist hier bevorzugt parallel zur Achse (A) orientiert. Dies hat den besonderen Vorteil, dass die Negativform zur urformenden Herstellung des Ringkörpers besonders einfach aufgebaut sein kann und ein Ausformen in Richtung der Achse (A) gestattet. Hierdurch werden die Werkzeugkosten massiv gesenkt.

An dem (zweiten) seitlichen Stützbereich (18) kann bevorzugt eine gerundete Aufgleitfläche (19) vorgesehen sein, so dass ein beschädigungsfreies Aufschieben des Weichdichtrings (63,64) begünstigt wird.

Der Übergang zwischen dem Mittelbereich (16) und dem mindestens einen seitlichen Stützbereich (17, 18) kann eine beliebige Formgebung haben. Es ist beispielsweise für den Einsatz von Weichdichtringen (63, 64) mit einer runden Querschnittsform, insbesondere für den Einsatz von O-Ringen vorteilhaft, wenn zwischen dem Mittelbereich (16) und dem mindestens einen seitlichen Stützbereich (17,18) im Querschnitt (Q) ein gerundeter Übergang vorliegt. Diese Formgebung ist in den Figuren in verschiedenen Ausbildungen gezeigt. Alternativ kann ein kantiger oder ein gestufter Übergang vorliegen (nicht dargestellt).

Die Lage, der Radius und die Bogenlänge des gerundeten Übergangs können bevorzugt einstellbar sein. Wenn der Ringkörper (2) insgesamt durch Umformen hergestellt wird, kann die Einstellung insbesondere im Herstellungsprozess durch die Ausbildung oder auch die Lage und insbesondere Relativlage der Herstellungsmittel, insbesondere der Prägewalzen oder des Bördelwerkzeugs eingestellt werden. Bei einer Herstellung des Ringkörpers (2') durch Urformen ist die Einstellbarkeit etwaig nur für den (zweiten) seitlichen Stützbereichs (18) auf der von dem Kontaktabschnitt (3) abgewandten Seite möglich.

Eine Hartdichtrichtung gemäß der vorliegenden Offenbarung kann bevorzugt einen Ringkörper (2,2') umfassen, der im Querschnitt (Q) eine Kavität (14) aufweist. Die Kavität (14) kann eine beliebige Formgebung und Lage haben. Sie ist bevorzugt als ein halboffener, überwiegend oder vollständig im Querschnitt des Ringkörpers angeordneter Hohlraum oder Halb-Hohlraum gebildet, der einerseits abgewandt zum Kontaktabschnitt (3) und andererseits abgewandt zum Wannenabschnitt (5) liegt. Mit anderen Worten weist der Ringkörper (2,2') bevorzugt im Querschnitt (Q) eine Kavität (14), die einerseits benachbart zum Kontaktabschnitt (3) und andererseits benachbart zum Wannenabschnitt (5) liegt und von diesen jeweils durch einen Teil der Wandung des Ringkörpers (2,2') getrennt ist.

Die Kavität (14) kann in der vorgesehenen Montageposition frei bleiben oder teilweise oder vollständig durch einen Füllkörper (15) ausgefüllt sein. Der Füllkörper (15) kann aus einem beliebigen Material gebildet sein und eine beliebige Formgebung haben. Er kann einem oder mehreren Zwecken dienen, beispielsweise einer Versteifung einer Erhöhung der Wärmeleitfähigkeit oder zur Unterstützung der Zu- oder Abfuhr eines Gleit- und/oder Kühlmittels. Die Erhöhung der Wärmeleitfähigkeit und/oder die Zu- oder Abfuhr des Gleit- und/oder Kühlmittels kann insbesondere vorteilhaft genutzt werden, um die Wärmeenergie abzuführen, die im Betrieb insbesondere im Anlagebereich (65) entsteht und über die danebenliegenden Wandungsbereiche des Ringkörpers (2,2') abzuführen ist.

Die Kavität (14) kann unabhängig von der Herstellungsart des Ringkörpers (2,2') gebildet sein. Ihre Formgebung kann an den jeweiligen Anwendungsfall angepasst sein.

In den Figuren 1 bis 5 sowie 10 bis 12 sind Beispiele gezeigt, bei denen eine Kavität (14) im Querschnitt (Q) durch den Ringkörper (2,2') teilweise oder vollständig umschlossen ist. Figuren 7 und 9 zeigen Beispiele, bei denen eine Kavität (14) als Halb-Hohlraum vorgesehen ist, der nur anteilig durch den Ringkörper (2,2') umschlossen ist.

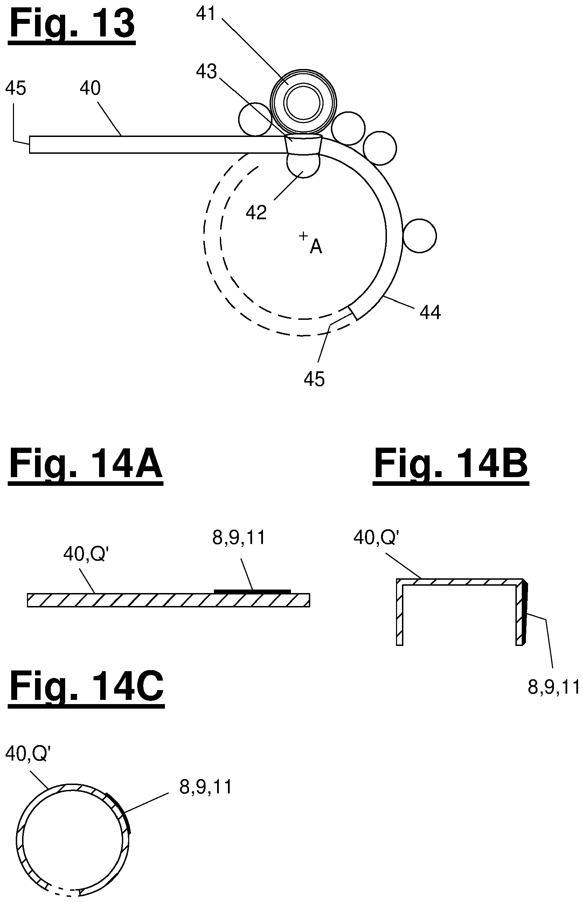

In dem Beispiel von Figur 5 ist ein Ringkörper (2) gezeigt, der durch Umformen aus einem Halbzeug (40) gebildet ist, das zuvor ein im Querschnitt (Q') gerundetes oder ringförmiges Flachmaterial mit einem Hohlraum war (vgl. Figur 14C).

Die Kavität (14) reicht hier tief in eine Knickstelle hinein, die im Bereich eines Ringbunds (13) zwischen dem Kontaktabschnitt (3) und dem Wannenabschnitt (5) gebildet ist. Hier ist in die Kavität (14) ein Füllkörper (15) eingebracht, der beispielsweise durch ein hochwärmeleitfähiges Metall wie Kupfer oder Zinn gebildet ist. Der Füllkörper (15) kann beispielsweise durch Schleuder-Heißlöten erzeugt sein. Er dient einerseits zur mechanischen Abstützung zwischen dem Kontaktabschnitt (3) und dem Wannenabschnitt (5) und kann andererseits die Wärmeabfuhr deutlich begünstigen, was wiederum zu erheblichen Vorteilen in der Standzeit führt.

An dem Bund (13) ist als optionale Ausbildung eine Schutzbeschichtung (25) vorgesehen. Die Schutzbeschichtung (25) kann ein- oder mehrlagig ausgebildet sein. Im gezeigten Beispiel ist die Schutzbeschichtung zweilagig und umfasst eine erste (innere) Lage (25a). Diese kann bevorzugt aus einem harten und verschleißbeständigen Material bestehen. Die erste Lage (25a) kann insbesondere aus demselben Material bestehen wie die erste Beschichtungslage (9) am Kontaktabschnitt (3). Die Schutzbeschichtung (25) umfasst in dem gezeigten Beispiel weiterhin eine zweite (äußere) Lage (25b). Diese zweite Lage (25b) kann bevorzugt aus einem anderen Material bestehen als die erste Lage (25a), insbesondere aus einem vergleichsweise weicheren Material. Weiterhin kann die zweite Lage (25b) bestimmte ergänzende Materialeigenschaften aufweisen, wie beispielsweise eine gegenüber der ersten Lage (25a) oder gegenüber dem Basismaterial des Ringkörpers (2, 2') erhöhte Korrosionsbeständigkeit oder eine erhöhte Beständigkeit gegenüber bestimmten zu erwarteten Fremdstoffen wie Säuren oder Laugen. Die zweite Lage (25b) kann etwaig aus demselben Material bestehen wie die zweite Beschichtungslage (10) am Kontaktabschnitt (3).

In einer bevorzugten Ausführung weisen die Gleitlaufbeschichtung (8) am Kontaktabschnitt (3) und die Schutzbeschichtung (25) am Bund (13) eine übereinstimmende Material- und Lagenzusammensetzung auf.

Die Schutzbeschichtung (25) und die Gleitlaufbeschichtung (8) können jeweils separat oder in einem gemeinsamen Schritt aufgebracht sein. Sie können ferner körperlich klar voneinander abgegrenzt oder ineinander übergehend ausgebildet sein. Dies kann etwaig selektiv für nur einen Teil der Lagen (25a, 25b) der Schutzbeschichtung bzw. für nur einen Teil der Lagen (9, 10, 11, 12) der Gleitlaufbeschichtung gelten.

In dem Beispiel von Figur 5 gehen die Schutzbeschichtung (25) am Bund (13) und die Gleitlaufbeschichtung (8) am Kontaktabschnitt (3) im Bereich einer dazwischen liegenden Umfangskante des Ringkörpers (2, 2') ineinander über. In einem anderen Beispiel, das in Figur 9 oder Figur 12 gezeigt ist, liegen die Schutzbeschichtung (25) am Bund (13) und die Gleitlaufbeschichtung (8) am Kontaktabschnitt (3) separat vor, wobei dazwischen kein direkter Materialübergang vorliegt.

Die Schutzbeschichtung (25) kann gemäß einer alternativen Ausführung an einem anderen radialen Oberflächenabschnitt des Ringkörpers (2, 2') angeordnet sein, wobei dieser radiale Oberflächenabschnitt zwischen einerseits dem Wannenabschnitt (5) und andererseits dem Kontaktabschnitt (3) liegt. Der radiale Oberflächenabschnitt kann zur Außenseite des Ringkörpers (2, 2') weisen, wie in Figuren 5 und 9 gezeigt, oder auch zur Innenseite des Ringkörpers (2, 2') weisen, wie in Figur 12 dargestellt.

Die Querschnittdarstellung gemäß Figur 5 zeigt eine weitere bevorzugte Ausbildung des Hartdichtrings. Hier sind an der radialen Mantelfläche des Ringkörpers (2, 2'), genauer im Bereich des Wannenabschnitts (5), in der Axialrichtung (A) zueinander benachbarte Oberflächenabschnitte (27, 28) mit einer unterschiedlichen Haftvermittlungswirkung vorgesehen. An dem Wannenabschnitt (5) kann insbesondere ein (erster) in der Axialrichtung (A) begrenzter Oberflächenabschnitt (27) vorgesehen sein, der nur einen Teil des Wannenabschnitts (5) bedeckt, wobei dieser Oberflächenabschnitt (27) eine erhöhte Haftvermittlungswirkung gegenüber einem dort aufsetzbaren Weichdichtring (63, 64) hat. Ein Oberflächenabschnitt (27) mit einer erhöhten Haftvermittlungswirkung kann auf beliebige Weise bereitgestellt sein, insbesondere durch das Vorliegen eines haftvermittelnden Zusatzmaterials (29) und/oder durch das Vorliegen einer haftvermittelnden Oberflächenstruktur. An dem Wannenabschnitt (5) kann weiterhin ein (zweiter) in der Axialrichtung (A) begrenzter Oberflächenabschnitt (28) vorgesehen sein, der andere Oberflächeneigenschaften hat. Dieser weitere Oberflächenabschnitt (28) kann insbesondere eine erhöhte Dichtvermittlungswirkung gegenüber einem Weichdichtring aufweisen. Die erhöhte Dichtvermittlung kann ebenfalls auf beliebige Weise bereitgestellt sein, insbesondere durch das Vorliegen eines dichtwirkungsvermittelnden Zusatzmaterials (30) und/oder durch das Vorliegen einer dichtwirkungsvermittelnden Oberflächenstruktur.

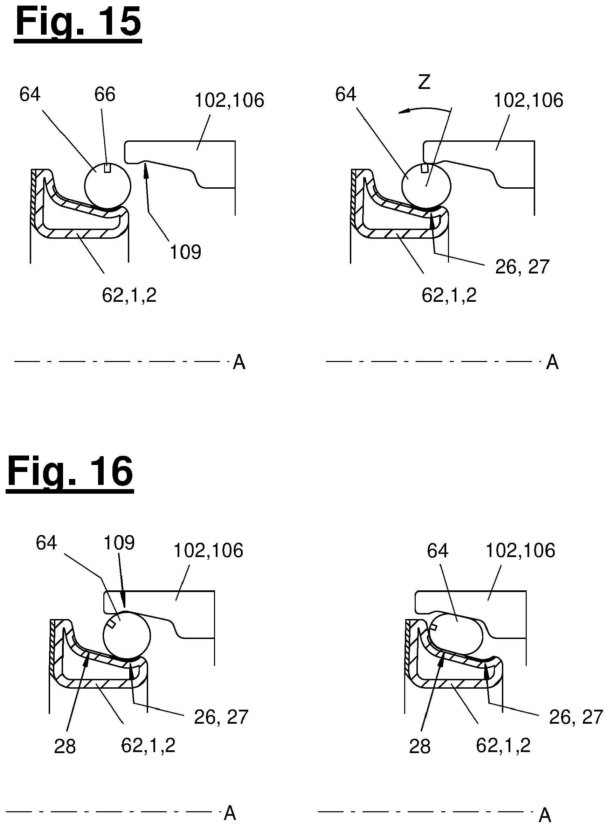

Figuren 15 und 16 erläutern ein bevorzugtes Vorgehen beim Einsetzen eines Hartdichtrings (62) mit einem am Wannenabschnitt (5) aufgesetzten Weichdichtring (64) in eine Dichtungsaufnahme (106) an einem Gehäuse (102). An dem Wannenabschnitt (5) des Hartdichtings (62) kann bevorzugt eine Umlaufrinne (26) vorgesehen sein, die in Figur 5 in vergrößerter Form gezeigt ist, Die Umlaufrinne (26) kann eine beliebige Ausbildung haben. Sie kann besonders bevorzugt angeordnet sein zwischen einerseits dem Mittelbereich (16) des Wannenabschnitts (5) und andererseits einem seitlichen Stützbereich (18), der von dem Kontaktabschnitt (3) entfernt liegt. Weiter bevorzugt können der Mittelbereich (16) und/oder der seitliche Stützbereich (18) gegenüber der Axialrichtung (A) geneigt sein. An der Umlaufrinne (26) ist im Querschnitt (Q) entlang der Achse (A) ein lokales Extremum des Durchmessers der Umfangsfläche vorhanden. Hierdurch kann ein Weichdichtring, der mit leichter Dehnung gegenüber seiner Grundform auf den Hartdichtring (2, 2', 62) aufgesetzt wird, gemäß seiner elastischen Rückverformung in eine Vorzugslage entlang der Umlaufrinne (26) gedrängt werden. Bei den Beispielen gemäß Figuren 5, 7, 9 und 15 ist die Umlaufrinne (26) an einer radialen Außenfläche des Ringkörpers durch ein lokales Minimum des Durchmessers der Umfangsfläche gebildet. Bei dem Beispiel von Figur 12 ist eine Umlaufrinne (26) an einer radialen Innenfläche des Ringkörpers durch ein lokales Maximum des Durchmessers der Umfangsfläche gebildet.

Der Weichdichtring (64) kann in einem Vormontage-Schritt an dem Wannenabschnitt (5) und insbesondere entlang der Umlaufrinne (26) so aufgesetzt werden, dass er frei von Verdrillung ist. Um das verdrillungsfreie Aufsetzen sowie eine schnelle Lageprüfung zu unterstützen kann der Weichdichtring etwaig eine Umfangslinien-Markierung (66) aufweisen, die insbesondere in einem unverformten Zustand des Weichdichtrings als Kreislinie auf der Außenoberfläche erkennbar ist. In Figur 15 ist die Umfangslinien-Markierung (66) an der radialen Außenfläche des Weichdichtrings (64) angeordnet und markiert den maximalen Umfang des Dichtrings.

In der gezeigten Vormontage-Lage ist über den Verlauf der Umfangslinien-Markierung (66) auf den ersten Blick feststellbar, ob (oder ob nicht) der Weichdichtring frei von einer Verdrillung auf dem Hartdichtring aufgesetzt ist. Wenn dies der Fall ist, kann der Hartdichtring gemäß dem Übergang von der linken Darstellung zur rechten Darstellung von Figur 15 in das Bauteil (102) eingesetzt werden. Bei diesem Einsetzen sollte es zu einer Rollbewegung kommen, bei der der Weichdichtring einerseits auf der Oberfläche des Wannenabschnitts (5) und andererseits auf der Oberfläche der Dichtungsaufnahme (106) am Bauteil (102) ohne Schlupf abrollt, sodass der Dichtring an jeder Stelle entlang seines Umfangs denselben Rollwinkel (Z) beschreibt.

Die oben beschriebene Ausbildung des Wannenabschnitts (5) mit in der Axialrichtung (A) zueinander benachbarten Oberflächenabschnitten (27, 28), eine unterschiedliche Haftvermittlungswirkung aufweisen, begünstigt diese gleichförmige Rollbewegung.

Figur 16 illustriert eine weitere Bewegung des Weichdichtrings (64), die bei der Herstellung der Dichtungspaarung gemäß der in Figur 6 gezeigten (vorgesehenen) Endlage auftreten kann. Hierbei wird der Hartdichtring (62) noch weiter in der Axialrichtung (A) in die Dichtungsaufnahme (106) am Bauteil (102) eingeschoben. Auch dabei sollte der Weichdichtring (64) eine Rollbewegung beschreiben, wobei der Weichdichtring (64) erneut einerseits auf der Oberfläche des Wannenabschnitts (5) und andererseits auf der Oberfläche der Dichtungsaufnahme (106) am Bauteil (102) ohne Schlupf abrollt. Dies ist im Übergang von der linken Darstellung zur rechten Darstellung in Figur 16 gezeigt. Während dieser Rollbewegung kann der Weichdichtring (64) etwaig zusätzlich elastisch komprimiert werden. Das Bestreben des Weichdichtrings (64), zu seiner ursprünglichen Körperform zurückzukehren, bewirkt eine elastische Lagerungskraft zwischen einerseits dem Hartdichtring (62) und andererseits der Dichtungsaufnahme (106) am Bauteil (102). Je gleichförmiger die Ausbildung des Rollwinkels (Z) entlang der Umfangsrichtung des Weichdichtrings (64) erzielt werden kann, desto gleichförmiger bilden sich auch die Lagerkräfte für den Hartdichtring (62) aus, was wiederum einen gleichförmigen und damit haltbaren Kontakt im Bereich der Gleitlauffläche (9) am Kontaktabschnitt (2) begünstigt.

Bei der in Figur 16 gezeigten Abrollbewegung kann das Weichdichtring (64) relativ zum Wannenabschnitt (5) eine Verlagerung entlang dessen Mittelbereichs (16) vollziehen. Durch diese Verlagerung besteht der überwiegende Körperkontakt zwischen dem Weichdichtring (64) und dem Hartdichtring (62) nicht mehr an dem Oberflächenabschnitt (27) mit der erhöhten Haftvermittlungswirkung, sondern an einem dazu benachbarten Oberflächenabschnitt (28), an dem bevorzugt eine erhöhte Dichtwirkungsvermittlung vorliegt.

Die vorgenannten Ausbildungen des Weichdichtrings (64) und des Hartdichtrings (62) begünstigen jeweils für sich allein oder in Kombination, dass eine verdrillungsfreie Vormontage sowie Endmontage des Weichdichtrings erzielt werden. Über die Umfangslinien-Markierung (66) am Weichdichtring (64) können ferner der verdrillungsfreie Zustand des Weichdichtrings (64) und die sich daraus ergebende korrekte Lagerung des Hartdichtrings (62) sowohl im Vormontage-Zustand gemäß der Figur 15 als auch bei der Endmontage / Herstellung der Dichtungspaarung gemäß Figur 16 mit bloßem Auge oder mit einfachen optischen Mitteln kontrolliert werden. Somit lassen sich Fehlmontagen und daraus folgende Beeinträchtigungen der Standzeit wirksam vermindern oder vollständig beseitigen.

Der Ringkörper (2,2') kann entlang der Umlaufrichtung (U) eine oder mehrere Öffnungen (23,24) aufweisen. Die Öffnungen (23,24) können separat eingebracht sein oder sich aus dem Herstellungsverfahren bzw. der ursprünglichen Form des Halbzeugs (40) ergeben.

Figur 4 zeigt beispielhaft eine in der Umlaufrichtung (U) durchgehende schlitzförmige Öffnung (24) sowie verschiedene lokale Öffnungen (23), welche die Wandung des Ringkörpers (2,2') durchdringen und bevorzugt in die Kavität (14) münden. Die Öffnungen (23,24) sind bevorzugt außerhalb des Kontaktabschnitts (3) und außerhalb des Wannenabschnitts (5) angeordnet. Sie können einerseits dazu dienen, einen Zugang für die Einbringung eines Füllkörpers (15) zu schaffen. Andererseits können sie zur Förderung der Zu- oder Abfuhr eines Gleit- und/oder Kühlmittels beitragen und insbesondere bei einer Relativbewegung der Hartdichtringe (61,62) eine Pumpwirkung erzeugen.

Figuren 8 und 13 erläutern schematisch ein bevorzugtes Verfahren zur Herstellung eines Hartdichtrings gemäß der vorliegenden Offenbarung. Es umfasst die Schritte der Bereitstellung eines Halbzeugs (40) mit einer länglichen Erstreckung; ein Umformen, insbesondere Rollformen, weiter insbesondere Rollprägen des Halbzeugs (40) und Bilden eines Vorproduktes (44) mit einer offenen Ringform; und ein Verbinden der Enden (45) des Vorproduktes (44) zur Bildung eines Ringkörpers (2) mit einer rotationssymmetrischen Grundform in Bezug auf eine Achse (A) und mit einem geschlossenen Umfang (U).

Das Umformen und insbesondere Rollformen oder Rollprägen kann besonders bevorzugt durch eine Anordnung von Walzen (41,42,43) insbesondere Prägerollen oder Prägewalzen erfolgen. Zumindest ein Teil der Walzen (41,42) hat bevorzugt eine solche Profiliierung, das im Zuge des Umformprozesses ein Teil der Querschnittsprofilierung des Ringkörpers (2) erzeugt wird. Ein oder mehrere weitere Walzen (43) können vorgesehen sein, um das Halbzeug oder das Vorprodukt zusätzlich zu führen und/oder eine ergänzende Anpassung an die profilierten Rollen herbeizuführen. Im Beispiel von Figur 8 sind eine obere Rolle (41) und eine untere Rolle (42) mit einer solchen Formgebung vorgesehen, dass zwischen ihnen das Querschnittsprofil eines Wannenabschnitts (5) mit einem Mittelbereich (16) und einem ersten seitlichen Stützbereich (17) sowohl ein Übergang zu einem Ringbund (13) vorgegeben wird. Eine weitere von der Seite her zustellbare Prägerolle (43) dient dazu, einen Körperbereich des Halbzeugs (40) der am (späteren) Ringkörper (2) den Anlageabschnitt (3) bildet, auszurichten und insbesondere den Neigungswinkel (W) gegenüber der Achse (A) einzustellen.

An diesem Körperbereich kann bereits vor dem Umformen, d.h. am Halbzeug (40), zumindest eine erste Beschichtungslage (9) für eine Gleitlaufbeschichtung (8) vorgesehen sein. Hierdurch lassen sich als Stangenware vorbereitete Halbzeuge mit bereits aufgebrachter Gleitlaufbeschichtung (8) verwenden, was eine erhebliche Kostenersparnis mit sich bringt. Das Fügen der Enden (45) des Vorproduktes (44) kann auf beliebige Weise erfolgen, besonders bevorzugt durch Laserschweißen und weiterhin bevorzugt unter Einbringung der Schweißenergie von einer Seite her, die einerseits von dem Kontaktabschnitt (3) und/oder andererseits von dem Wannenabschnitt (5) abgewandt ist. Mit anderen Worten ist bevorzugt eine Einbringung der Schweißenergie von einer Seite mit einer halboffenen Kavität (14) her in das Material des Ringkörpers (2) vorgesehen, so dass eine möglichst geringe Beeinträchtigung der bereits aufgebrachten Gleitlaufbeschichtung (8) erfolgt. Auf diese Weise kann eine besonders hohe Koplanarität zwischen den aneinanderstoßenden Endbereichen der lokalen Kontaktabschnitte (3) an den zu verbindenden Enden (45) des Vorprodukts (44) erreicht werden. Alterantiv kann die Einbringung der Schweißenergie von einer anderen Seite her erfolgen, insbesondere von der in Radialrichtung von der Kavität (14) weg weisenden Seite.

Die Koplanarität kann weiterhin dadurch erhöht werden, dass eine weitere Beschichtungslage (10) in Überlagerung der ersten Beschichtungslage (9) nach dem Verbinden der Enden (45) aufgebracht wird. Diese weitere Beschichtungslage (10) kann insbesondere eine Einlaufschicht (12) sein. Alternativ oder zusätzlich kann eine verschleißbeständige Dauergleitschicht (11) bzw. eine zusätzliche Gleitlaufschicht (11) aufgebracht werden. Mit anderen Worten wird die weitere Beschichtungslage (10,11) an dem Ringkörper (2) mit geschlossenem Umfang (U) aufgebracht.

Die mindestens eine Beschichtungslage (9,10) der Gleitlaufbeschichtung (8) kann auf beliebige Weise aufgebracht werden. Besonders bevorzugt wird mindestens eines der folgenden Verfahren eingesetzt:
- Thermisches Spritzen, insbesondere
   ∘ High-Velocity-Oxi-Fuel-Spraying;
   ∘ Lichtbogendrahtspritzen;
   ∘ Plasmaspritzen;
- Laserlegieren;
- Auftragsschweißen, insbesondere mittels Laser oder Lichtbogen;
- Gasphasenabscheidung, insbesondere
   ∘ Physical Vapor Deposition;
   ∘ Chemical Vapor Deposition

Für das Herstellungsverfahren mittels Umformen kann ein beliebiges Halbzeug (40) verwendet werden. Dies kann beispielsweise gemäß der in Figur 14A ein Flachmaterial sein, insbesondere ein flaches Metallband oder Blechband.

Alternativ kann das Halbzeug (40) ein vorprofiliertes Material sein, insbesondere ein im Querschnitt (Q') vorprofiliertes Flachmaterial (vgl. Figur 7).

Wiederum alternativ kann das Halbzeug (40) ein im Querschnitt (Q') abgewinkeltes Flachmaterial sein, insbesondere ein gewinkeltes Metall- oder Blechprofil, weiter insbesondere ein L-Profil oder U-Profil (vgl. Figur 14B).

Wiederum alternativ kann das Halbzeug (40) ein im Querschnitt (Q') gerundetes oder ringförmiges Flachmaterial mit einem Hohlraum sein, insbesondere ein Rohrprofil mit einem geschlossenen oder offenen Umfang (vgl. Figur 14C, Figuren 1 bis 5), weiter insbesondere ein Rundrohrprofil oder ein Rechteckrohrprofil.

Abwandlungen der Erfindung sind in verschiedener Weise möglich. Insbesondere sind alle im Rahmen der vorliegenden Offenbarung gezeigten, beschriebenen oder beanspruchten Merkmale, Aspekte und Ausprägungen in beliebiger Weise miteinander kombinierbar oder gegeneinander ersetzbar.

Alternativ oder zusätzlich zu den oben erläuterten Verfahrensschritten kann vorgesehen sein, dass mindestens eine der Beschichtungslagen (9, 10) mittels der folgenden Schritte aufgebracht wird:
Lokales Erwärmen der Materialoberfläche des Kontaktabschnitts (3) bis zur Überschreitung der Schmelz-Temperatur; Auflegieren von Grafit; Abkühlen, insbesondere Schock-Abkühlen der Materialoberfläche des Kontaktabschnitts (3) unter die Austenitisierungs-Temperatur.

Der Ringkörper gemäß der vorliegenden Offenbarung kann durch ein beliebiges Herstellungsverfahren gebildet sein. Alternativ oder zusätzlich zu den konkret beschriebenen Verfahren zum Umformen und Urformen kann auch mindestens eines der folgenden Verfahren genutzt sein, um den Ringkörper und/oder den Füllkörper und/oder die Gleitlaufbeschichtung herzustellen:
- Formloses Urformen mit additivem Materialauftrag, insbesondere 3D-Druck mittels Auftrag eines Materials, das als Pulver, Filament oder flüssiges Material vorliegt;
- Formloses Urformen mit additivem Materialauftrag, insbesondere 3D-Druck durch selektives Laserschmelzen (SLS) oder Multi Jet Fusion (MJF)
- Formgebundenes Urformen, insbesondere durch Gesenkschmieden, Hartgießen, Schleudergießen, Schwerkraftgießen, Feingießen, Sintern.

### Bezugszeichen

- 1: Hartdichtring / Gleitlauf- Hartdichtring
- 2: Ringkörper
- 2': Ringkörper
- 3: Kontaktabschnitt
- 4: Stirnfläche
- 5: Wannenabschnitt
- 6: Radiale Mantelfläche (nach außen hin)
- 7: radiale Mantelfläche (zum Zentrum hin)
- 8: Gleitlaufbeschichtung
- 9: Erste Beschichtungslage
- 10: Zweite Beschichtungslage
- 11: Gleitlaufschicht
- 12: Einlaufschicht
- 13: Bund / Ringbund / Radial-Ringbund
- 14: Kavität
- 15: Füllkörper
- 16: Mittelbereich / Sitzfläche
- 17: Erster seitlicher Stützbereich
- 18: Zweiter seitlicher Stützbereich
- 19: Aufgleitfläche
- 20: Rückwandung
- 21: Hinterschneidung
- 22: Kragen / Axial-Kragen
- 23: Öffnung (lokal)
- 24: Öffnung (umlaufend)
- 25: Schutzbeschichtung
- 25a: Schutzbeschichtung, erste Lage
- 25b: Schutzbeschichtung, zweite Lage
- 26: Umlaufrinne
- 27: Oberflächenabschnitt / Haftvermittlungsabschnitt
- 28: Oberflächenabschnitt / Dichtvermittlungsabschnitt
- 29: Zusatzmaterial, haftungsvermittelnd
- 30: Zusatzmaterial, dichtungsvermittelnd
- 40: Halbzeug
- 41: Walze / Prägerolle
- 42: Walze / Prägerolle
- 43: Walze / Prägerolle
- 44: Vorprodukt
- 45: Ende / endseitige Stirnfläche
- 60: Gleitlauf-Dichtvorrichtung
- 61: Erster Hartdichtring
- 62: Zweiter Hartdichtring
- 63: Erster Weichdichtring
- 64: Zweiter Weichdichtring
- 65: Anlagebereich
- 66: Umfangslinien-Markierung
- 100: Baugruppe
- 101: Erstes Bauteil
- 102: Zweites Bauteil
- 103: rotatorisches Lager
- 104: Spalt
- 105: Dichtungsaufnahme
- 106: Dichtungsaufnahme
- 107: Erstes Kompartment
- 108: Zweites Kompartment
- 109: Umlaufrinne
- A: Achse / Axialrichtung
- D: Dicke (Materialdicke am seitlichen Stützbereichs)
- L: Längserstreckung (Länge d. seitlichen Stützbereichs)
- N1: Neigungswinkel
- N2: Neigungswinkel
- Q: Querschnitt Ringkörper, Lage in Richtung der Achse A
- Q`: Querschnitt Halbzeug
- R: Radialrichtung
- W: Winkel (zwischen Kontaktabschnitt / Stirnfläche und Achse)
- Z: Rollwinkel des Weichdichtrings beim Einsetzen in die Dichtungsaufnahme

## Patentansprüche

1. Hartdichtring, umfassend einen Ringkörper (2, 2'), der bezüglich einer Achse (A) eine rotationssymmetrische Grundform aufweist, wobei
- der Ringkörper in einem Querschnitt (Q), der in Richtung der Achse (A) liegt, einen Kontaktabschnitt (3) aufweist, der an einer Stirnseite des Ringkörpers (2, 2') angeordnet ist, wobei der Kontaktabschnitt (3) in Richtung der Achse (A) nach außen weist, und wobei
- der Ringkörper (2, 2') im Querschnitt (Q) einen Wannenabschnitt (5) aufweist, der an einer radialen Mantelfläche des Ringkörpers (2,2') angeordnet ist und in Bezug auf die Richtung der Achse (A) von dem Kontaktabschnitt (3) abgewandt liegt, wobei
- der Ringkörper (2, 2') an dem Kontaktabschnitt (3) eine Gleitlaufbeschichtung (8) aufweist,
- **dadurch gekennzeichnet, dass**
- der Ringkörper (2) durch Umformen aus einem abgelängten Ausgangsmaterial hergestellt ist, das in Ringform gebogen und an den Enden gefügt ist.

2. Hartdichtring nach Anspruch 1, wobei der Ringkörper (2, 2') im Querschnitt (Q) eine Kavität (14) aufweist, die einerseits abgewandt zum Kontaktabschnitt (3) und andererseits abgewandt zum Wannenabschnitt (5) liegt, und wobei der Ringkörper (2, 2') insbesondere entlang der Umlaufrichtung (U) eine oder mehrere Öffnungen (23, 24) aufweist, die zur Kavität (14) münden.

3. Hartdichtring nach einem der vorhergehenden Ansprüche, wobei der Ringkörper (2, 2') im Querschnitt (Q) an dem Wannenabschnitt (5) zur Seite des Kontaktabschnitts (3) hin einen Bund (13) aufweist, und wobei an dem Ringkörper (2, 2') in einem radialen Oberflächenabschnitt, der zwischen einerseits dem Wannenabschnitt (5) und andererseits dem Kontaktabschnitt (3) liegt, insbesondere an einer radialen Umfangsfläche des Bunds (13), eine Schutzbeschichtung (25) vorgesehen ist.

4. Hartdichtring nach einem der vorhergehenden Ansprüche, wobei die Gleitlaufbeschichtung (8) mindestens eine gradierte Beschichtungslage mit einer inhomogenen Materialstruktur aufweist.

5. Hartdichtring nach einem der vorhergehenden Ansprüche, wobei der Ringkörper (2, 2')
- aus einem Metallwerkstoff gebildet ist; UND/ODER
- aus einem Kunststoff gebildet ist; UND/ODER
- aus einem Verbundmaterial gebildet ist, insbesondere umfassend einen Faserverbund, weiter insbesondere hergestellt durch ein formgebendes Compositbildungsverfahren.

6. Hartdichtring nach einem der vorhergehenden Ansprüche, wobei die Gleitlaufbeschichtung (8) mehrlagig ausgebildet ist und insbesondere zwei oder mehr Beschichtungslagen (9, 10) aufweist, die sich in Richtung der Achse (A) überlagern.

7. Hartdichtring nach dem vorhergehenden Anspruch, wobei die Gleitlaufbeschichtung (8) eine verschleißbeständige Dauergleitschicht (11) umfasst, und wobei die Dauergleitschicht (11) insbesondere
- eine Härte von mindestens 400 HV (Vickers-Härte) aufweist, weiter insbesondere mehr als 600 HV, und/oder
- durch ein Metall-Matrix-Composit gebildet ist, das eine Bindematrix mit eingelagerten Hartpartikeln umfasst; und/oder
- einen zusätzlichen Selbstschmierstoff beinhaltet, insbesondere umfassend zumindest einen der folgenden Stoffe oder deren Verbindung:
▪ Molybdän;
▪ Kupfer;
▪ Bor;
▪ Molybdänsulfid;
▪ Bronze;
▪ Messing;
▪ Grafit;
▪ Bornitrit (insbesondere hexagonales Bornitrit)
▪ PTFE.

8. Hartdichtring nach dem vorhergehenden Anspruch 6, wobei die Gleitlaufbeschichtung (8) eine separate Einlaufschicht (12) umfasst, und wobei die Einlaufschicht (12) insbesondere
- Grafit oder ein Weichmetall wie Blei, Kupfer, Zink, Zinn oder Aluminium in Reinform oder als Legierung umfasst; UND/ODER
- Grafit oder ein Weichmetall wie Blei, Kupfer, Zink, Zinn oder Aluminium in einer Metallmatrix umfasst.

9. Hartdichtring nach Anspruch 2, wobei in der Kavität (14) ein Füllkörper (15) angeordnet ist, wobei der Füllkörper (14) insbesondere
- Ein separater Körper aus dem Grundmaterial des Ringkörpers ist, UND/ODER
- Ein anderes Material als das Grundmaterial des Ringkörpers umfasst, insbesondere ein Material mit einer geringeren Oberflächenhärte und/oder ein Material mit einer höheren Wärmeleitfähigkeit, und/oder ein Material, das die Steifigkeit lokal verändert; UND/ODER
- Eine 3D-Stützkontur umfasst, die insbesondere formlosen Herstellungsprozess oder mit einem additiven Fertigungsverfahren gebildet ist, UND/ODER
- Einen aktiven Körper umfasst, insbesondere einen Sensor oder einen Aktor.

10. Hartdichtring nach einem der vorhergehenden Ansprüche, wobei an der radialen Mantelfläche des Ringkörpers (2, 2'), insbesondere im Bereich des Wannenabschnitts (5), in der Axialrichtung (A) zueinander benachbarte Oberflächenabschnitte (27, 28) mit einer unterschiedlichen Haftvermittlungswirkung vorliegen.

11. Gleitlauf-Dichtvorrichtung umfassend mindestens einen ersten Hartdichtring (61) und einen zweiten Hartdichtring (62), die jeweils einen Kontaktabschnitt (3) aufweisen, wobei die Hartdichtringe (61, 62) in der vorgesehenen Montageposition entlang der Achse (A) zueinander benachbart und zueinander koaxial angeordnet sind, sodass sich die Kontaktabschnitte (3) umlaufend berühren, **dadurch gekennzeichnet, dass** zumindest einer der Hartdichtringe (61, 62) nach Anspruch 1 ausgebildet ist.

12. Gleitlauf-Dichtvorrichtung nach dem vorhergehenden Anspruch, wobei die Gleitlauf-Dichtvorrichtung (60) weiterhin mindestens einen Weichdichtring (63, 64) umfasst, wobei der Weichdichtring (63, 64) insbesondere eine Umfangslinien-Markierung (66) aufweist, die in einem unverformten Zustand des Weichdichtrings (63, 64) als eine Kreislinie auf der Außenoberfläche erkennbar ist.

13. Herstellungsverfahren zur Herstellung eines Hartdichtrings nach Anspruch 1, wobei das Herstellungsverfahren die folgenden Schritte umfasst:
- Bereitstellen eines Halbzeugs (40) mit einer länglichen oder geraden Erstreckung, wobei das Halbzeug (40) insbesondere ein Flachmaterial oder ein vorprofiliertes Material ist;
- Umformen, insbesondere Rollformen, weiter insbesondere Rollprägen des Halbzeugs (40) und Bilden eines Vorproduktes (44) mit einer offenen Ringform;
- Verbinden der Enden (45) des Vorproduktes (44) zur Bildung eines Ringkörpers (2) mit einer rotationssymmetrischen Grundform in Bezug auf eine Achse (A) und mit einem geschlossenen Umfang (U).

14. Herstellungsverfahren nach dem vorhergehenden Anspruch, wobei der Hartdichtring an dem Kontaktabschnitt (3) des Ringkörpers (2) eine Gleitlaufbeschichtung (8) aufweist, und wobei insbesondere
- das Halbzeug (40) einen Körperbereich aufweist, der am Ringkörper (2) den Anlageabschnitt (3) bildet, und wobei bereits an dem Körperabschnitt des Halbzeugs (40), vor der Bildung des Ringkörpers (2), zumindest eine erste Beschichtungslage (9) für eine Gleitlaufbeschichtung (8) vorgesehen ist oder aufgebracht wird; und
- eine weitere Beschichtungslage (10) in Überlagerung der ersten Beschichtungslage (9) aufgebracht wird, insbesondere eine Einlaufschicht (12).

15. Herstellungsverfahren nach dem vorhergehenden Anspruch, wobei mindestens eine der Beschichtungslagen (9, 10) durch eines der folgenden Verfahren aufgebracht wird:
- Thermisches Spritzen, insbesondere;
▪ High-Velocity-Oxi-Fuel-Spraying;
▪ Lichtbogendrahtspritzen;
▪ Plasmaspritzen;
- Laserlegieren;
- Auftragsschweißen, insbesondere mittels Laser oder Lichtbogen;
- Gasphasenabscheidung, insbesondere
▪ Physical Vapor Deposition;
▪ Chemical Vapor Deposition.

## Claims

1. Hard sealing ring, comprising an annular body (2, 2'), which has a basic shape that is rotationally symmetrical with respect to an axis (A), wherein
- in a cross section (Q) lying in the direction of the axis (A), the annular body has a contact portion (3), which is arranged on an end face of the annular body (2, 2'), wherein the contact portion (3) faces outwards in the direction of the axis (A), and wherein
- in the cross section (Q), the annular body (2, 2') has a trough portion (5), which is arranged on a radial lateral surface of the annular body (2, 2') and lies facing away from the contact portion (3) in relation to the direction of the axis (A) wherein
- the annular body (2, 2') has an anti-friction coating (8) on the contact portion (3),
- **characterized in that**
- the annular body (2) is produced by shaping from a cut-to-length starting material, which is bent into the shape of a ring and joined at the ends.

2. Hard sealing ring according to Claim 1, wherein, in the cross section (Q), the annular body (2, 2') has a cavity (14), which lies facing away from the contact portion (3) on the one hand and facing away from the trough portion (5) on the other hand, and wherein the annular body (2, 2') has particularly along the circumferential direction (U) one or more openings (23, 24), which open out into the cavity (14).

3. Hard sealing ring according to one of the preceding claims, wherein, in the cross section (Q), the annular body (2, 2') has a collar (13) on the trough portion (5), towards the side of the contact portion (3), and wherein a protective coating (25) is provided on the annular body (2, 2'), in a radial surface portion lying between the trough portion (5) on the one hand and the contact portion (3) on the other hand, particularly on a radial circumferential surface of the collar (13).

4. Hard sealing ring according to one of the preceding claims, wherein the anti-friction coating (8) has at least one graded coating layer with an inhomogeneous material structure.

5. Hard sealing ring according to one of the preceding claims, wherein the annular body (2, 2')
- is formed from a metal material; AND/OR
- is formed from a plastic; AND/OR
- is formed from a composite material, particularly comprising a fibre composite, more particularly produced by a moulding composite-forming process.

6. Hard sealing ring according to one of the preceding claims, wherein the anti-friction coating (8) is formed as multilayered and has particularly two or more coating layers (9, 10), which are overlaid in the direction of the axis (A).

7. Hard sealing ring according to the preceding claim, wherein the anti-friction coating (8) comprises a wear-resistant permanent sliding layer (11), and wherein the permanent sliding layer (11) has particularly
- a hardness of at least 400 HV (Vickers hardness), more particularly more than 600 HV, and/or
- is formed by a metal-matrix composite, which comprises a binding matrix with incorporated hard particles; and/or
- contains an additional self-lubricant, particularly comprising at least one of the following substances or a combination thereof:
• molybdenum;
• copper;
• boron;
• molybdenum sulfide;
• bronze;
• brass;
• graphite;
• boron nitride (particularly hexagonal boron nitride)
• PTFE.

8. Hard sealing ring according to the preceding Claim 6, wherein the anti-friction coating (8) comprises a separate running-in layer (12), and wherein the running-in layer (12) comprises particularly
- graphite or a soft metal such as lead, copper, zinc, tin or aluminium in pure form or as an alloy; AND/OR
- graphite or a soft metal such as lead, copper, zinc, tin or aluminium in a metal matrix.

9. Hard sealing ring according to Claim 2, wherein a filler (15) is arranged in the cavity (14), wherein the filler (14) is particularly
- a separate body made of the base material of the annular body, AND/OR
- comprises a different material than the base material of the annular body, particularly a material with a lower surface hardness and/or a material with a higher thermal conductivity, and/or a material that locally changes the stiffness; AND/OR
- comprises a 3D supporting contour, which is formed particularly in a mouldless production process or by an additive manufacturing method, AND/OR
- comprises an active body, particularly a sensor or an actuator.

10. Hard sealing ring according to one of the preceding claims, wherein on the radial lateral surface of the annular body (2, 2'), particularly in the region of the trough portion (5), there are surface portions (27, 28) adjacent to one another in the axial direction (A) with different adhesion-promoting effects.

11. Anti-friction sealing device comprising at least a first hard sealing ring (61) and a second hard sealing ring (62), each of which has a contact portion (3), wherein, in the intended mounting position, the hard sealing rings (61, 62) are arranged along the axis (A) so as to be mutually adjacent and coaxial to one another, such that the contact portions (3) peripherally touch, **characterized in that** at least one of the hard sealing rings (61, 62) is formed according to Claim 1.

12. Anti-friction sealing device according to the preceding claim, wherein the anti-friction sealing device (60) also comprises at least one soft sealing ring (63, 64), wherein the soft sealing ring (63, 64) has particularly a circumferential-line marking (66), which in an undeformed state of the soft sealing ring (63, 64) is identifiable as a circular line on the outer surface.

13. Production method for producing a hard sealing ring according to Claim 1, wherein the production method comprises the following steps:
- providing a semifinished product (40) of an elongated or straight extent, wherein the semifinished product (40) is particularly a flat material or a pre-profiled material;
- shaping, particularly roll-forming, more particularly roll-stamping, the semifinished product (40) and forming a preliminary product (44) in the shape of an open ring;
- connecting the ends (45) of the preliminary product (44) to form an annular body (2) with a rotationally symmetrical basic shape in relation to an axis (A) and a closed circumference (U).

14. Production method according to the preceding claim, wherein the hard sealing ring has an anti-friction coating (8) on the contact portion (3) of the annular body (2), and wherein particularly
- the semifinished product (40) has a body region which forms the contact portion (3) on the annular body (2), and wherein at least a first coating layer (9) for an anti-friction coating (8) is already provided on or is applied to the body portion of the semifinished product (40) before the forming of the annular body (2); and
- a further coating layer (10), particularly a running-in layer (12), is applied so as to overlay the first coating layer (9).

15. Production method according to the preceding claim, wherein at least one of the coating layers (9, 10) is applied by one of the following methods:
- thermal spraying, particularly;
• high-velocity oxy-fuel spraying;
• arc wire spraying;
• plasma spraying;
- laser alloying;
- build-up welding, particularly by means of a laser or an arc;
- vapour phase deposition, particularly
• physical vapour deposition;
• chemical vapour deposition.

## Revendications

1. Bague d'étanchéité dure, comprenant un corps annulaire (2, 2'), qui présente une forme de base à symétrie de rotation par rapport à un axe (A),
- le corps annulaire comportant, dans une vue en coupe transversale (Q) qui s'étend en direction de l'axe (A), une portion de contact (3) qui est disposée sur un côté frontal du corps annulaire (2, 2'), la portion de contact (3) pointant vers l'extérieur en direction de l'axe (A), et
- le corps annulaire (2, 2') comportant dans la vue en coupe transversale (Q) une portion en cuvette (5) qui est disposée sur une surface latérale radiale du corps annulaire (2, 2') et qui est située à l'opposé de la portion de contact (3) par rapport à la direction de l'axe (A),
- le corps annulaire (2, 2') comportant un revêtement de glissement (8) sur la portion de contact (3),
- **caractérisée en ce que**
- le corps annulaire (2) est fabriqué par formage à partir d'une matière de départ coupée à longueur qui est pliée en forme d'anneau et assemblée aux extrémités.

2. Bague d'étanchéité dure selon la revendication 1, le corps annulaire (2, 2') comportant, dans une vue en coupe transversale (Q), une cavité (14) qui est située d'une part à l'opposé de la portion de contact (3) et d'autre part à l'opposé de la portion en cuvette (5) et le corps annulaire (2, 2') comportant une ou plusieurs ouvertures (23, 24), qui débouchent dans la cavité (14), en particulier le long de la direction circonférentielle (U).

3. Bague d'étanchéité dure selon l'une des revendications précédentes, le corps annulaire (2, 2') comportant, dans une vue en coupe transversale (Q), une collerette (13) sur la portion en cuvette (5) vers le côté de la portion de contact (3), et
un revêtement de protection (25) étant prévu sur le corps annulaire (2, 2') dans une portion de surface radiale qui est située entre, d'une part, la portion en cuvette (5) et, d'autre part, la portion de contact (3), notamment sur une surface circonférentielle radiale de la collerette (13).

4. Bague d'étanchéité dure selon l'une des revendications précédentes, le revêtement de glissement (8) comportant au moins une couche de revêtement graduelle pourvue d'une structure de matière inhomogène.

5. Bague d'étanchéité dure selon l'une des revendications précédentes, le corps annulaire (2, 2')
- étant formé à partir d'une matière métallique ; ET/OU
- étant formé à partir d'une matière synthétique ; ET/OU
- étant formé à partir d'un matériau composite, comprenant notamment un composite fibreux, en outre notamment produit par un procédé de formation de composite par formage.

6. Bague d'étanchéité dure selon l'une des revendications précédentes, le revêtement de glissement (8) étant conçu en plusieurs couches et comportant en particulier deux couches de revêtement (9, 10) ou plus qui se chevauchent en direction de l'axe (A).

7. Bague d'étanchéité dure selon la revendication précédente, le revêtement de glissement (8) comprenant une couche de glissement permanente (11) résistante à l'usure et, en particulier, la couche de glissement permanente (11)
- présentant une dureté d'au moins 400 HV (dureté Vickers), plus particulièrement supérieure à 600 HV, et/ou
- étant formée par un composite à matrice métallique qui comprend une matrice de liaison pourvue de particules dures incorporées ; et/ou
- contenant un autolubrifiant additionnel, comprenant notamment l'une au moins des substances suivantes ou leur combinaison :
▪ du molybdène ;
▪ du cuivre ;
▪ du bore ;
▪ du sulfure de molybdène ;
▪ du bronze ;
▪ du laiton ;
▪ du graphite ;
▪ du nitrite de bore (en particulier du nitrite de bore hexagonal)
▪ du PTFE.

8. Bague d'étanchéité dure selon la revendication précédente 6,
le revêtement de glissement (8) comprenant une couche de rodage séparée (12), et la couche de rodage (12) comprenant en particulier
- du graphite ou un métal mou tel que du plomb, du cuivre, du zinc, de l'étain ou de l'aluminium sous forme pure ou sous forme d'alliage ; ET/OU
- du graphite ou un métal mou tel que du plomb, du cuivre, du zinc, de l'étain ou de l'aluminium dans une matrice métallique.

9. Bague d'étanchéité dure selon la revendication 2, un corps de remplissage (15) étant disposé dans la cavité (14), en particulier le corps de remplissage (14)
- étant un corps séparé formé à partir de la matière de base du corps annulaire ET/OU
- comprenant une matière différente de la matière de base du corps annulaire, notamment une matière présentant une dureté superficielle plus faible et/ou une matière présentant une conductivité thermique plus élevée, et/ou une matière modifiant localement la rigidité ; ET/OU
- comprenant un contour de support 3D, qui est formé notamment par un procédé de fabrication informe ou par un procédé de fabrication additive, ET/OU
- comprenant un corps actif, notamment un capteur ou un actionneur.

10. Bague d'étanchéité dure selon l'une des revendications précédentes, des portions de surface (27, 28) qui sont adjacentes les unes aux autres dans la direction axiale (A) et qui présentent différents effets favorisant l'adhérence étant présentes sur la surface latérale radiale du corps annulaire (2, 2'), en particulier dans la zone de la portion en cuvette (5).

11. Dispositif d'étanchéité et de glissement comprenant au moins une première bague d'étanchéité dure (61) et une deuxième bague d'étanchéité dure (62), qui comportent chacune une portion de contact (3), les bagues d'étanchéité dures (61, 62) étant adjacentes les unes aux autres le long de l'axe (A) dans la position de montage prévue et étant disposées coaxialement les unes aux autres, de sorte que les portions de contact (3) se touchent sur toute la circonférence, **caractérisé en ce que** l'une au moins des bagues d'étanchéité dures (61, 62) est conçue selon la revendication 1.

12. Dispositif d'étanchéité et de glissement selon la revendication précédente, le dispositif d'étanchéité et de glissement (60) comprenant en outre au moins une bague d'étanchéité souple (63, 64), la bague d'étanchéité souple (63, 64) comportant en particulier un marquage formant ligne circonférentielle (66) qui peut être vu comme une ligne circulaire sur la surface extérieure lorsque la bague d'étanchéité souple (63, 64) est dans un état non déformé.

13. Procédé de fabrication destiné à réaliser une bague d'étanchéité dure selon la revendication 1, le procédé de fabrication comprenant les étapes suivantes :
- fournir un produit semi-fini (40) présentant une extension allongée ou droite, le produit semi-fini (40) étant notamment une matière plate ou une matière pré-profilée ;
- mettre en forme, en particulier mettre en forme au rouleau, en particulier gaufrer au rouleau, le produit semi-fini (40) et former un produit préliminaire (44) en forme d'anneau ouvert ;
- relier les extrémités (45) du produit préliminaire (44) pour former un corps annulaire (2) ayant une forme de base à symétrie de rotation par rapport à un axe (A) et ayant une circonférence fermée (U).

14. Procédé de fabrication selon la revendication précédente, la bague d'étanchéité dure comportant un revêtement de glissement (8) sur la portion de contact (3) du corps annulaire (2), et en particulier
- le produit semi-fini (40) comportant une zone de corps qui forme la portion de contact (3) sur le corps annulaire (2), et au moins une première couche de revêtement (9) destinée à un revêtement de glissement (8) étant déjà prévue ou appliquée sur la portion de corps du produit semi-fini (40) avant que le corps annulaire (2) ne soit formé ; et
- une autre couche de revêtement (10) étant appliquée par superposition à la première couche de revêtement (9), en particulier une couche de rodage (12) .

15. Procédé de fabrication selon la revendication précédente, l'une au moins des couches de revêtement (9, 10) étant appliquée par l'un des procédés suivants :
- projection thermique, en particulier :
▪ High-Velocity-Oxi-Fuel-Spraying ;
▪ pulvérisation à arc électrique ;
▪ pulvérisation au plasma;
- alliage au laser ;
- soudage par dépôt, notamment par laser ou arc électrique ;
- dépôt en phase gazeuse, en particulier
▪ Physical Vapor Déposition ;
▪ Chemical Vapor Déposition.
